(19) Europäisches Patentamt / European Patent Office / Office européen des brevets

(11) **EP 4 309 460 B1**

(12) **EUROPEAN PATENT SPECIFICATION**

(45) Date of publication and mention of the grant of the patent:
**24.06.2026 Bulletin 2026/26**

(21) Application number: **22713066.3**

(22) Date of filing: **21.03.2022**

(51) International Patent Classification (IPC):
**H04W 74/0833** *(2024.01)* **H04L 5/00** *(2006.01)*

(52) Cooperative Patent Classification (CPC):
**H04L 5/0094; H04L 5/0048; H04W 74/0833;**
Y02D 30/70

(86) International application number:
**PCT/IB2022/052570**

(87) International publication number:
**WO 2022/201003 (29.09.2022 Gazette 2022/39)**

(54) **INDICATING CHANGED TIME DOMAIN POSITION OF SSB**

ANZEIGE EINER GEÄNDERTEN ZEITBEREICHSPOSITION VON SSB

INDICATION DE POSITION DANS LE DOMAINE TEMPOREL MODIFIÉE D'UN SSB

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2021 US 202163163794 P**

(43) Date of publication of application:
**24.01.2024 Bulletin 2024/04**

(73) Proprietor: **Lenovo (Singapore) Pte. Ltd.**
**Singapore 556741 (SG)**

(72) Inventors:
• **JUNG, Hyejung**
  **Northbrook, Illinois 60062 (US)**
• **BHAMRI, Ankit**
  **63322 Rödermark (DE)**
• **NANGIA, Vijay**
  **Woodridge, Illinois 60517 (US)**

(74) Representative: **Openshaw & Co.**
**8 Castle Street**
**Farnham, Surrey GU9 7HR (GB)**

(56) References cited:
**WO-A1-2020/143064    US-A1- 2020 396 744**

**Description**

CROSS-REFERENCE TO RELATED APPLICATIONS

This application claims priority to United States Provisional Patent Application Number 63/163,794 entitled "NETWORK POWER SAVING WITH FLEXIBLE SS/PBCH TRANSMISSION" and filed on 20 March 2021 for Hyejung Jung, Ankit Bhamri, and Vijay Nangia.

FIELD

One method at a User Equipment ("UE") for flexible Synchronization Signal and Physical Broadcast Channel ("SS/PBCH") transmission includes receiving, via higher layer signaling, first information corresponding to time domain positions of a first set of transmitted Synchronization Signal and Physical Broadcast Channel Blocks ("SSBs") in a first Synchronization Signal and Physical Broadcast Channel Block ("SSB") burst and receiving, via physical layer signaling, second information corresponding to time domain positions of a second set of transmitted SSBs in a second SSB burst, where the first information is different from the second information. The method includes performing random access using the first information and second information.

One method at a Radio Access Network ("RAN") for flexible SS/PBCH transmission includes configuring a UE, via higher layer signaling, with first information corresponding to time domain positions of a first set of transmitted SSBs in a first SSB burst. The method includes changing a time domain position of at least one SSB and transmitting, via physical layer signaling, second information corresponding to time domain positions of a second set of transmitted SSBs in a second SSB burst, where the first information is different from the second information and where the second information indicates the changed time domain position of the at least one SSB.

BACKGROUND

For Third Generation Partnership Project ("3GPP") New Radio ("NR", i.e., 5th generation Radio Access Technology ("RAT")), densely deployed network nodes and relatively high power consumption per node from massive Multiple-In/Multiple-Out ("MIMO") and/or high frequency band operations may lead to increased power consumption by network infrastructure. For example, a gNB (i.e., 5th generation base station) may transmit the maximum 64 Synchronization Signal and Physical Broadcast Channel Blocks ("SSBs") and the maximum 64 corresponding copies of Physical Downlink Control Channel and/or Physical Downlink Shared Channel ("PDCCH/PDSCH") for System Information Block 1 ("SIB1") delivery in every 20ms in Frequency Range #2 ("FR2", i.e., frequencies from 24.25 GHz to 52.6 GHz).

US2020396744A1 discloses techniques for a transmission scheme for physical downlink control channel (PDCCH) with single carrier waveform; synchronization signal block (SSB) rate matching indication for NR unlicensed operation; beam acquisition for frequency division duplex (FDD) systems; and/or SSB patterns and multiplexing for downlink transmissions.

WO2020143064A1 discloses a data transmission method and device. The device transmits or receives, according to a predefined rule and/or received indication information, a signal and/or channel other than an SSB on a time-frequency resource overlapping with a time-frequency resource corresponding to the SSB. Since the signal and/or channel can be transmitted or received on the time-frequency resource corresponding to the SSB not to be transmitted, a resource utilization rate can be effectively increased.

BRIEF SUMMARY

Disclosed are procedures for flexible SS/PBCH transmission. Said procedures may be implemented by apparatus, systems, methods, or computer program products. The invention is defined by the appended independent claims.

One method at a User Equipment ("UE") for flexible SS/PBCH transmission includes receiving, via higher layer signaling, first information corresponding to time domain positions of a first set of transmitted Synchronization Signal and Physical Broadcast Channel Blocks ("SSBs") in a first SSB burst and receiving, via physical layer signaling, second information corresponding to time domain positions of a second set of transmitted SSBs in a second SSB burst, where the first information is different from the second information. The method includes performing random access using the first information and second information.

One method at a RAN for flexible SS/PBCH transmission includes configuring a UE, via higher layer signaling, with first information corresponding to time domain positions of a first set of transmitted SSBs in a first SSB burst. The method includes changing a time domain position of at least one SSB and transmitting, via physical layer signaling, second information corresponding to time domain positions of a second set of transmitted SSBs in a second SSB burst, where the first information is different from the second information and where the second information indicates the changed time domain position of the at least one SSB.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a block diagram illustrating one embodiment of a wireless communication system for flexible SS/PBCH transmission;
Figure 2 is a diagram illustrating one embodiment of a Third Generation Partnership Project ("3GPP") New Radio ("NR") protocol stack;
Figure 3 is a diagram illustrating one embodiment of a procedure for flexible SS/PBCH transmission;
Figure 4 is a diagram illustrating one embodiment of an information element ("IE") *ServingCellConfigCommonSIB;*
Figure 5 is a diagram illustrating one embodiment of a modification to IE *ServingCellConfigCommonSIB;*
Figure 6 is a diagram illustrating another embodiment of a modification to IE *ServingCellConfigCommonSIB;*
Figure 7A is a diagram illustrating one embodiment of time domain positions for SSB transmission;
Figure 7B is a diagram illustrating another embodiment of time domain positions for SSB transmission;
Figure 8A is a diagram illustrating one embodiment of PRACH occasions;
Figure 8B is a diagram illustrating one embodiment of remapping of PRACH occasions to newly added SSBs;
Figure 9 is a block diagram illustrating one embodiment of a user equipment apparatus that may be used for flexible SS/PBCH transmission;
Figure 10 is a block diagram illustrating one embodiment of a network apparatus that may be used for flexible SS/PBCH transmission;
Figure 11 is a flowchart diagram illustrating one embodiment of a method for flexible SS/PBCH transmission; and
Figure 12 is a flowchart diagram illustrating another embodiment of a method for flexible SS/PBCH transmission.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects.

For example, the disclosed embodiments may be implemented as a hardware circuit comprising custom very-large-scale integration ("VLSI") circuits or gate arrays, off-the-shelf semiconductors such as logic chips, transistors, or other discrete components. The disclosed embodiments may also be implemented in programmable hardware devices such as field programmable gate arrays, programmable array logic, programmable logic devices, or the like. As another example, the disclosed embodiments may include one or more physical or logical blocks of executable code which may, for instance, be organized as an object, procedure, or function.

Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random-access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, or device.

Code for carrying out operations for embodiments may be any number of lines and may be written in any combination of one or more programming languages including an object-oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN"), wireless LAN ("WLAN"), or a wide area network ("WAN"), or the connection may be made to an external computer (for example, through the Internet using an Internet Service Provider ("ISP")).

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one and only one of any single item in the list. For example, "one of A, B and C" includes only A, only B or only C and excludes combinations of A, B and C. As used herein, "a member selected from the group consisting of A, B, and C," includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart diagrams and/or block diagrams.

The code may also be stored in a storage device that can direct a computer, other programmable data processing apparatus, or other devices to function in a particular manner, such that the instructions stored in the storage device produce an article of manufacture including instructions which implement the function/act specified in the flowchart diagrams and/or block diagrams.

The code may also be loaded onto a computer, other programmable data processing apparatus, or other devices to cause a series of operational steps to be performed on the computer, other programmable apparatus, or other devices to produce a computer implemented process such that the code which execute on the computer or other programmable apparatus provide processes for implementing the functions/acts specified in the flowchart diagrams and/or block diagrams.

The call-flow diagrams, flowchart diagrams and/or block diagrams in the Figures illustrate the architecture, functionality, and operation of possible implementations of apparatuses, systems, methods, and program products according to various embodiments. In this regard, each block in the flowchart diagrams and/or block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the call-flow, flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

*[[Overview + Problem Statement]]*

Generally, the present disclosure describes systems, methods, and apparatus for flexible SS/PBCH transmission. In certain embodiments, the methods may be performed using computer code embedded on a computer-readable medium. In certain embodiments, an apparatus or system may include a computer-readable medium containing computer-readable code which, when executed by a processor, causes the apparatus or system to perform at least a portion of the below described solutions. Described herein are procedures to allow a network node to flexibly adapt its MIMO operation and spatial coverage based on estimated and/or predicted user distribution and/or locations.

In New Radio ("NR"), use of millimeter wave spectrum along with network densification can significantly boost area capacity. Further, NR features such as a configurable synchronization signal and physical broadcast channel block (i.e., SSB - a discovery signal) transmission with periodicity ranging from 5ms to 160 ms and on-demand system information ("SI") delivery make NR more energy efficient compared to LTE in terms of required energy per bit.

However, densely deployed network nodes and relatively high power consumption per node from massive MIMO and/or high frequency band operations would lead to overall increased power consumption by 5G infrastructure. For example, gNB may transmit the maximum 64 SSBs and the maximum 64 corresponding copies of PDCCH/PDSCH for SIB1 delivery in every 20ms in FR2. Thus, enhancements may be necessary to provide greater flexibility and efficiency in terms of turning on and off a network node, e.g., partially turning off for a particular spatial coverage based on traffic loads and user distributions.

In some embodiments, a User Equipment device ("UE") receives information corresponding to a plurality of SSB periodicities, each SSB periodicity is applicable to a subset of SSB indexes within a half frame. In one implementation, the number of subsets of SSB indexes within a half frame are determined based on the maximum number of SSB indexes within a half frame.

In some embodiments, after receiving semi-static information corresponding to time domain positions of a first set of transmitted SSBs in an SSB burst via SIB1 or dedicated Radio Resource Control ("RRC") signaling, a UE further receives dynamic information corresponding to time domain positions of a second set of transmitted SSBs in an SSB burst via Physical Downlink Control Channel ("PDCCH"). The dynamic information may be different from the semi-static information.

In some embodiments, a UE identifies first at least one SSB index that is indicated as being transmitted in semi-static information but is indicated as being not transmitted in dynamic information. Further, the UE identifies a plurality of sets of Physical Random Access Channel ("PRACH") resources, each set of PRACH resources associated with each of the first at least one SSB index. Upon determining that second at least one SSB index is indicated as being not transmitted in the semi-static information but is indicated as being transmitted in the dynamic information, the UE maps each of the second at least one SSB index to each set of PRACH resources that was associated with each of the first at least one SSB index.

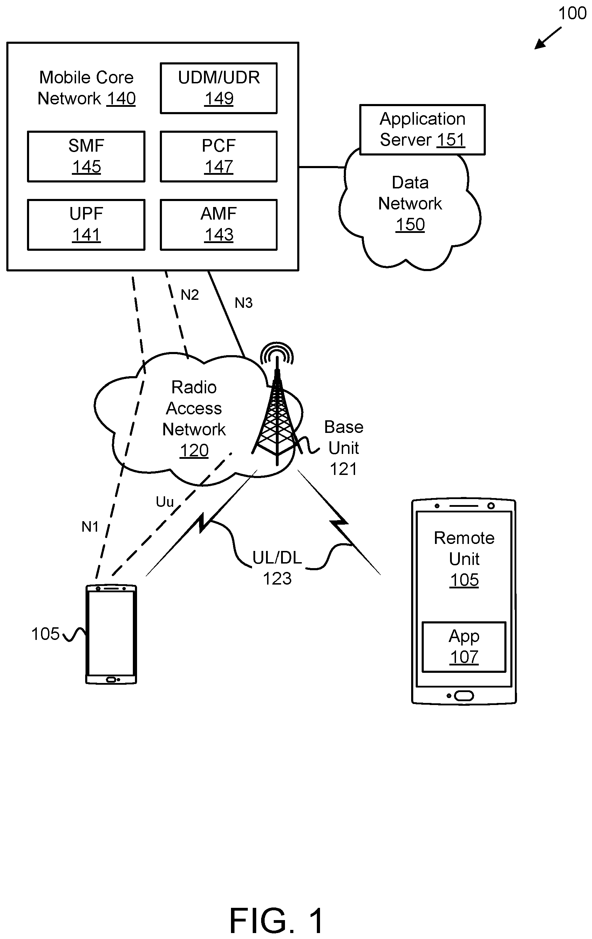

*[[Fig 1 - Overall system]]*

Figure 1 depicts a wireless communication system 100 for flexible SS/PBCH transmission, according to embodiments of the disclosure. In one embodiment, the wireless communication system 100 includes at least one remote unit 105, a radio access network ("RAN") 120, and a mobile core network 140. The RAN 120 and the mobile core network 140 form a mobile communication network. The RAN 120 may be composed of a base unit 121 with which the remote unit 105 communicates using wireless communication links 123. Even though a specific number of remote units 105, base units 121, wireless communication links 123, RANs 120, and mobile core networks 140 are depicted in Figure 1, one of skill in the art will recognize that any number of remote units 105, base units 121, wireless communication links 123, RANs 120, and mobile core networks 140 may be included in the wireless communication system 100.

In one implementation, the RAN 120 is compliant with the Fifth-Generation ("5G") cellular system specified in the Third Generation Partnership Project ("3GPP") specifications. For example, the RAN 120 may be a Next Generation Radio Access Network ("NG-RAN"), implementing New Radio ("NR") Radio Access Technology ("RAT") and/or Long-Term Evolution ("LTE") RAT. In another example, the RAN 120 may include non-3GPP RAT (e.g., Wi-Fi® or Institute of Electrical and Electronics Engineers ("IEEE") 802.11-family compliant WLAN). In another implementation, the RAN 120 is compliant with the LTE system specified in the 3GPP specifications. More generally, however, the wireless communication system 100 may implement some other open or proprietary communication network, for example Worldwide Interoperability for Microwave Access ("WiMAX") or IEEE 802.16-family standards, among other networks. The present disclosure is not intended to be limited to the implementation of any particular wireless communication system architecture or protocol.

In one embodiment, the remote units 105 may include computing devices, such as desktop computers, laptop computers, personal digital assistants ("PDAs"), tablet computers, smart phones, smart televisions (e.g., televisions connected to the Internet), smart appliances (e.g., appliances connected to the Internet), set-top boxes, game consoles, security systems (including security cameras), vehicle on-board computers, network devices (e.g., routers, switches, modems), or the like. In some embodiments, the remote units 105 include wearable devices, such as smart watches, fitness bands, optical head-mounted displays, or the like. Moreover, the remote units 105 may be referred to as the UEs, subscriber units, mobiles, mobile stations, users, terminals, mobile terminals, fixed terminals, subscriber stations, user terminals, wireless transmit/receive unit ("WTRU"), a device, or by other terminology used in the art. In various embodiments, the remote unit 105 includes a subscriber identity and/or identification module ("SIM") and the mobile equipment ("ME") providing mobile termination functions (e.g., radio transmission, handover, speech encoding and decoding, error detection and correction, signaling and access to the SIM). In certain embodiments, the remote unit 105 may include a terminal equipment ("TE") and/or be embedded in an appliance or device (e.g., a computing device, as described above).

The remote units 105 may communicate directly with one or more of the base units 121 in the RAN 120 via uplink ("UL") and downlink ("DL") communication signals. Furthermore, the UL and DL communication signals may be carried over the wireless communication links 123. Furthermore, the UL communication signals may comprise one or more uplink channels, such as the Physical Uplink Control Channel ("PUCCH") and/or Physical Uplink Shared Channel ("PUSCH"), while the DL communication signals may comprise one or more downlink channels, such as the Physical Downlink Control Channel ("PDCCH") and/or Physical Downlink Shared Channel ("PDSCH"). Here, the RAN 120 is an intermediate network that provides the remote units 105 with access to the mobile core network 140.

In some embodiments, the remote units 105 communicate with an application server 151 via a network connection with the mobile core network 140. For example, an application 107 (e.g., web browser, media client, telephone and/or Voice-over-Internet-Protocol ("VoIP") application) in a remote unit 105 may trigger the remote unit 105 to establish a protocol data unit ("PDU") session (or other data connection) with the mobile core network 140 via the RAN 120. The mobile core network 140 then relays traffic between the remote unit 105 and the application server 151 in the packet data network 150 using the PDU session. The PDU session represents a logical connection between the remote unit 105 and the User Plane Function ("UPF") 141.

In order to establish the PDU session (or PDN connection), the remote unit 105 must be registered with the mobile core network 140 (also referred to as "attached to the mobile core network" in the context of a Fourth Generation ("4G") system). Note that the remote unit 105 may establish one or more PDU sessions (or other data connections) with the mobile core network 140. As such, the remote unit 105 may have at least one PDU session for communicating with the packet data network 150. The remote unit 105 may establish additional PDU sessions for communicating with other data networks and/or other communication peers.

In the context of a 5G system ("5GS"), the term "PDU Session" refers to a data connection that provides end-to-end ("E2E") user plane ("UP") connectivity between the remote unit 105 and a specific Data Network ("DN") through the UPF 141. A PDU Session supports one or more Quality of Service ("QoS") Flows. In certain embodiments, there may be a one-to-one mapping between a QoS Flow and a QoS profile, such that all packets belonging to a specific QoS Flow have the same 5G QoS Identifier ("5QI").

In the context of a 4G/LTE system, such as the Evolved Packet System ("EPS"), a Packet Data Network ("PDN") connection (also referred to as EPS session) provides E2E UP connectivity between the remote unit and a PDN. The PDN connectivity procedure establishes an EPS Bearer, i.e., a tunnel between the remote unit 105 and a PDN Gateway ("PGW", not shown) in the mobile core network 140. In certain embodiments, there is a one-to-one mapping between an EPS Bearer and a QoS profile, such that all packets belonging to a specific EPS Bearer have the same QoS Class Identifier ("QCI").

The base units 121 may be distributed over a geographic region. In certain embodiments, a base unit 121 may also be referred to as an access terminal, an access point, a base, a base station, a Node-B ("NB"), an Evolved Node B (abbreviated as eNodeB or "eNB," also known as Evolved Universal Terrestrial Radio Access Network ("E-UTRAN") Node B), a 5G/NR Node B ("gNB"), a Home Node-B, a relay node, a RAN node, or by any other terminology used in the art. The base units 121 are generally part of a RAN, such as the RAN 120, that may include one or more controllers communicably coupled to one or more corresponding base units 121. These and other elements of radio access network are not illustrated but are well known generally by those having ordinary skill in the art. The base units 121 connect to the mobile core network 140 via the RAN 120.

The base units 121 may serve a number of remote units 105 within a serving area, for example, a cell or a cell sector, via a wireless communication link 123. The base units 121 may communicate directly with one or more of the remote units 105 via communication signals. Generally, the base units 121 transmit DL communication signals to serve the remote units 105 in the time, frequency, and/or spatial domain. Furthermore, the DL communication signals may be carried over the wireless communication links 123. The wireless communication links 123 may be any suitable carrier in licensed or unlicensed radio spectrum. The wireless communication links 123 facilitate communication between one or more of the remote units 105 and/or one or more of the base units 121.

Note that during NR operation on unlicensed spectrum (referred to as "NR-U"), the base unit 121 and the remote unit 105 communicate over unlicensed (i.e., shared) radio spectrum. Similarly, during LTE operation on unlicensed spectrum (referred to as "LTE-U"), the base unit 121 and the remote unit 105 also communicate over unlicensed (i.e., shared) radio spectrum.

In one embodiment, the mobile core network 140 is a 5G Core network ("5GC") or an Evolved Packet Core ("EPC"), which may be coupled to a packet data network 150, like the Internet and private data networks, among other data networks. A remote unit 105 may have a subscription or other account with the mobile core network 140. In various embodiments, each mobile core network 140 belongs to a single mobile network operator ("MNO") and/or Public Land Mobile Network ("PLMN"). The present disclosure is not intended to be limited to the implementation of any particular wireless communication system architecture or protocol.

The mobile core network 140 includes several network functions ("NFs"). As depicted, the mobile core network 140 includes at least one UPF 141. The mobile core network 140 also includes multiple control plane ("CP") functions including, but not limited to, an Access and Mobility Management Function ("AMF") 143 that serves the RAN 120, a Session Management Function ("SMF") 145, a Policy Control Function ("PCF") 147, a Unified Data Management function ("UDM") and a User Data Repository ("UDR"). In some embodiments, the UDM is co-located with the UDR, depicted as combined entity "UDM/UDR" 149. Although specific numbers and types of network functions are depicted in Figure 1, one of skill in the art will recognize that any number and type of network functions may be included in the mobile core network 140.

The UPF(s) 141 is/are responsible for packet routing and forwarding, packet inspection, QoS handling, and external PDU session for interconnecting Data Network ("DN"), in the 5G architecture. The AMF 143 is responsible for termination of Non-Access Spectrum ("NAS") signaling, NAS ciphering and integrity protection, registration management, connection management, mobility management, access authentication and authorization, security context management. The SMF 145 is responsible for session management (i.e., session establishment, modification, release), remote unit (i.e., UE) Internet Protocol ("IP") address allocation and management, DL data notification, and traffic steering configuration of the UPF 141 for proper traffic routing.

The PCF 147 is responsible for unified policy framework, providing policy rules to CP functions, access subscription information for policy decisions in UDR. The UDM is responsible for generation of Authentication and Key Agreement ("AKA") credentials, user identification handling, access authorization, subscription management. The UDR is a repository of subscriber information and may be used to service a number of network functions. For example, the UDR may store subscription data, policy-related data, subscriber-related data that is permitted to be exposed to third party applications, and the like.

In various embodiments, the mobile core network 140 may also include a Network Repository Function ("NRF") (which provides Network Function ("NF") service registration and discovery, enabling NFs to identify appropriate services in one another and communicate with each other over Application Programming Interfaces ("APIs")), a Network Exposure Function ("NEF") (which is responsible for making network data and resources easily accessible to customers and network partners), an Authentication Server Function ("AUSF"), or other NFs defined for the 5GC. When present, the AUSF may act as an authentication server and/or authentication proxy, thereby allowing the AMF 143 to authenticate a remote unit 105. In certain embodiments, the mobile core network 140 may include an authentication, authorization, and accounting ("AAA") server.

In various embodiments, the mobile core network 140 supports different types of mobile data connections and different types of network slices, wherein each mobile data connection utilizes a specific network slice. Here, a "network slice" refers to a portion of the mobile core network 140 optimized for a certain traffic type or communication service. For example, one or more network slices may be optimized for enhanced mobile broadband ("eMBB") service. As another example, one or more network slices may be optimized for ultra-reliable low-latency communication ("URLLC") service. In other examples, a network slice may be optimized for machine-type communication ("MTC") service, massive MTC ("mMTC") service, Internet-of-Things ("IoT") service. In yet other examples, a network slice may be deployed for a specific application service, a vertical service, a specific use case, etc.

A network slice instance may be identified by a single-network slice selection assistance information ("S-NSSAI") while a set of network slices for which the remote unit 105 is authorized to use is identified by network slice selection assistance information ("NSSAI"). Here, "NSSAI" refers to a vector value including one or more S-NSSAI values. In certain embodiments, the various network slices may include separate instances of network functions, such as the SMF 145 and UPF 141. In some embodiments, the different network slices may share some common network functions, such as the AMF 143. The different network slices are not shown in Figure 1 for ease of illustration, but their support is assumed.

While Figure 1 depicts components of a 5G RAN and a 5G core network, the described embodiments for flexible SS/PBCH transmission apply to other types of communication networks and RATs, including IEEE 802.11 variants, Global System for Mobile Communications ("GSM", i.e., a 2G digital cellular network), General Packet Radio Service ("GPRS"), Universal Mobile Telecommunications System ("UMTS"), LTE variants, CDMA 2000, Bluetooth, ZigBee, Sigfox, and the like.

Moreover, in an LTE variant where the mobile core network 140 is an EPC, the depicted network functions may be replaced with appropriate EPC entities, such as a Mobility Management Entity ("MME"), a Serving Gateway ("SGW"), a PGW, a Home Subscriber Server ("HSS"), and the like. For example, the AMF 143 may be mapped to an MME, the SMF 145 may be mapped to a control plane portion of a PGW and/or to an MME, the UPF 141 may be mapped to an SGW and a user plane portion of the PGW, the UDM/UDR 149 may be mapped to an HSS, etc.

In the following descriptions, the term "gNB" is used for the base station/ base unit, but it is replaceable by any other radio access node, e.g., RAN node, ng-eNB, eNB, Base Station ("BS"), Access Point ("AP"), NR BS, 5G NB, Transmission and Reception Point ("TRP"), etc. Additionally, the term "UE" is used for the mobile station/ remote unit, but it is replaceable by any other remote device, e.g., remote unit, MS, ME, etc. Further, the operations are described mainly in the context of 5G NR. However, the below described solutions/methods are also equally applicable to other mobile communication systems for flexible SS/PBCH transmission.

It should be understood that this disclosure uses the terms Channel State Information Reference Signal Resource Index ("CRI"), and Synchronization Signal/Physical Broadcast Channel Block Resource Index ("SSBRI"), and beam are used interchangeably. interchangeably.

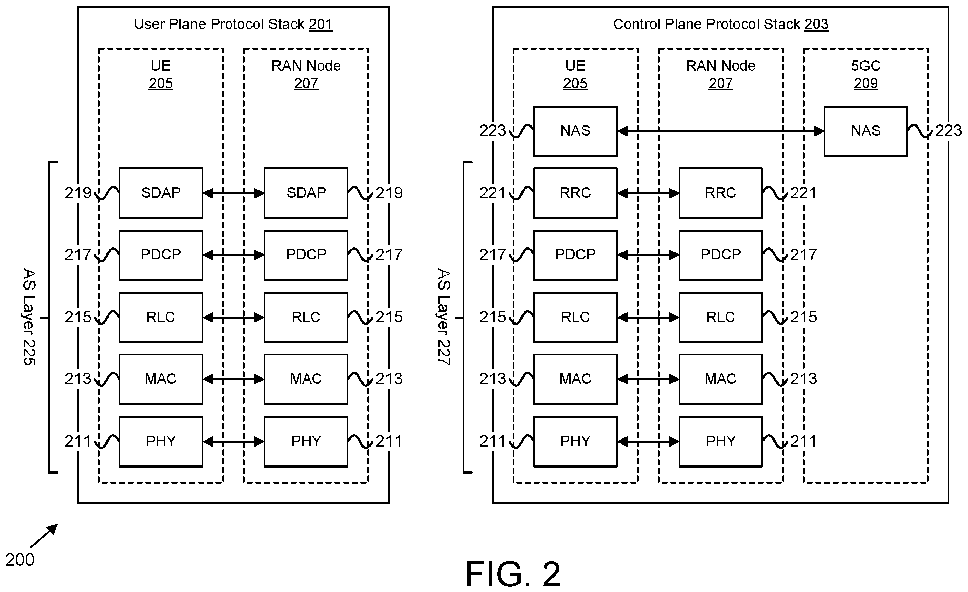

### [[Fig 2 - NR Protocol Stack]]

Figure 2 depicts a NR protocol stack 200, according to embodiments of the disclosure. While Figure 2 shows a UE 205, a RAN node 207 and the 5G core network 209, these are representative of a set of remote units 105 interacting with a base unit 121 and a mobile core network 140. As depicted, the protocol stack 200 comprises a User Plane protocol stack 201 and a Control Plane protocol stack 203. The User Plane protocol stack 201 includes a physical ("PHY") layer 211, a Medium Access Control ("MAC") sublayer 213, a Radio Link Control ("RLC") sublayer 215, a Packet Data Convergence Protocol ("PDCP") sublayer 217, and Service Data Adaptation Protocol ("SDAP") layer 219. The Control Plane protocol stack 203 includes a physical layer 211, a MAC sublayer 213, a RLC sublayer 215, and a PDCP sublayer 217. The Control Place protocol stack 203 also includes a Radio Resource Control ("RRC") layer 221 and a Non-Access Stratum ("NAS") layer 223.

The AS layer 225 (also referred to as "AS protocol stack") for the User Plane protocol stack 201 consists of at least SDAP, PDCP, RLC and MAC sublayers, and the physical layer. The AS layer 227 for the Control Plane protocol stack 203 consists of at least RRC, PDCP, RLC and MAC sublayers, and the physical layer. The Layer-2 ("L2") is split into the SDAP, PDCP, RLC and MAC sublayers. The Layer-3 ("L3") includes the RRC sublayer 221 and the NAS layer 223 for the control plane and includes, e.g., an Internet Protocol ("IP") layer or PDU Layer (note depicted) for the user plane. L1 and L2 are referred to as "lower layers," while L3 and above (e.g., transport layer, application layer) are referred to as "higher layers" or "upper layers."

The physical layer 211 offers transport channels to the MAC sublayer 213. The MAC sublayer 213 offers logical channels to the RLC sublayer 215. The RLC sublayer 215 offers RLC channels to the PDCP sublayer 217. The PDCP sublayer 217 offers radio bearers to the SDAP sublayer 219 and/or RRC layer 221. The SDAP sublayer 219 offers QoS flows to the core network (e.g., 5GC). The RRC layer 221 provides for the addition, modification, and release of Carrier Aggregation ("CA") and/or Dual Connectivity ("DC"). The RRC layer 221 also manages the establishment, configuration, maintenance, and release of Signaling Radio Bearers ("SRBs") and Data Radio Bearers ("DRBs"). In certain embodiments, a RRC entity functions for detection of and recovery from radio link failure.

The NAS layer 223 is between the UE 205 and 5GC 209 (e.g., an AMF in the 5GC 209). NAS messages are passed transparently through the RAN. The NAS layer 223 is used to manage the establishment of communication sessions and for maintaining continuous communications with the UE 205 as it moves between different cells of the RAN. In contrast, the AS layers 225/227 are between the UE 205 and the RAN (i.e., RAN node 207) and carry information over the wireless portion of the network. While not depicted in Figure 2, an IP layer exists above the NAS layer 223, a transport layer exists above the IP layer, and an application layer exists above the transport layer.

The MAC layer 213 is the lowest sublayer in the Layer-2 architecture of the NR protocol stack. Its connection to the PHY layer 211 below is through transport channels, and the connection to the RLC layer 215 above is through logical channels. The MAC layer 213 therefore performs multiplexing and demultiplexing between logical channels and transport channels: the MAC layer 213 in the transmitting side constructs MAC PDUs, known as transport blocks, from MAC Service Data Units ("SDUs") received through logical channels, and the MAC layer 213 in the receiving side recovers MAC SDUs from MAC PDUs received through transport channels.

The MAC layer 213 provides a data transfer service for the RLC layer 215 through logical channels, which are either control logical channels which carry control data (e.g., RRC signaling) or traffic logical channels which carry user plane data. On the other hand, the data from the MAC layer 213 is exchanged with the physical layer through transport channels, which are classified as downlink or uplink. Data is multiplexed into transport channels depending on how it is transmitted over the air.

The PHY layer 211 is responsible for the actual transmission of data and control information via the air interface, i.e., the PHY Layer 211 carries all information from the MAC transport channels over the air interface on the transmission side. Some of the important functions performed by the PHY layer 211 include coding and modulation, link adaptation (e.g., Adaptive Modulation and Coding ("AMC")), power control, cell search and random access (for initial synchronization and handover purposes) and other measurements (inside the 3GPP system (i.e., NR and/or LTE system) and between systems) for the RRC layer 221. The PHY layer 211 performs transmissions based on transmission parameters, such as the modulation scheme, the coding rate (i.e., the modulation and coding scheme ("MCS")), the number of physical resource blocks etc.

### *[[Fig 3]]*

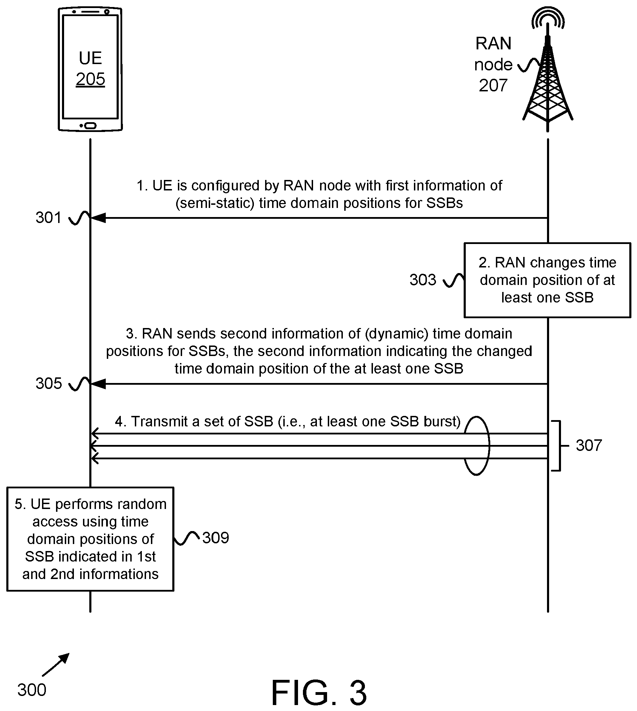

Figure 3 depicts an exemplary procedure 300 for flexible SS/PBCH transmission, according to the embodiments of the disclosure. The procedure 300 involves the UE 205 (e.g., one embodiment of the remote unit 105) and the RAN node 207 (e.g., one embodiment of the base unit 121).

At Step 1, the RAN node 207 configures the UE 205 with first information of time domain positions (i.e., semi-static positions) for SSB transmissions (see messaging 301).

At Step 2, the RAN node 207 determines to change the time domain position of at least one SSB see block 303). The RAN node 207 changes the SSB time domain position according to the principles described herein. For example, the RAN node 207 may determine to cancel a SSB transmission due to decreased need for SSB in the cell. As another example, the RAN node 207 may determine to add an additional SSB transmission due to increased need for SSB in the cell.

At Step 3, the UE 205 reports a sequence of beams to the RAN node 207 based on the performed measurements (see messaging 305). Here, the second information supersedes the first information, and the second information indicates the changed time domain position of the at least one SSB.

At Step 4, the RAN node 207 transmits a set of SSBs, i.e., at least one SSB burst (see transmission 307). The time domain positions of SSB are as indicated in the first information and modified by the second information.

At Step 5, the UE 205 performs random access using the transmitted SSBs, i.e., using the time domain positions of SSB as indicated in the first and second information (see block 309).

### *Regarding Cell Search*

Cell search is the procedure for a UE to acquire time and frequency synchronization with a cell and to detect the physical layer Cell ID of the cell.

A UE receives the following synchronization signals ("SS") in order to perform cell search: the primary synchronization signal ("PSS") and secondary synchronization signal ("SSS") as defined in 3GPP Technical Specification ("TS") 38.211.

A UE assumes that reception occasions of a physical broadcast channel ("PBCH"), PSS, and SSS are in consecutive symbols, as defined in 3GPP TS 38.211, and form a SS/PBCH block ("SSB"). The UE assumes that SSS, PBCH Demodulation Reference Signal ("DM-RS"), and PBCH data have same Energy Per Resource Element ("EPRE"). The UE may assume that the ratio of PSS EPRE to SSS EPRE in a SS/PBCH block is either 0 dB or 3 dB. If the UE has not been provided dedicated higher layer parameters, the UE may assume that the ratio of PDCCH DM-RS EPRE to SSS EPRE is within -8 dB and 8 dB when the UE monitors PDCCHs for a DCI format 1_0 with CRC scrambled by System Information Radio Network Temporary Identifier ("SI-RNTI"), Paging Radio Network Temporary Identifier ("P-RNTI"), or Random-Access Radio Network Temporary Identifier ("RA-RNTI").

The candidate SS/PBCH blocks in a half frame are indexed in an ascending order in time from 0 to $\overline{L}_{max} - 1$, where $\overline{L}_{max}$ is determined according to SS/PBCH block patterns for Cases A through E. $L_{max}$ is a maximum number of SS/PBCH block indexes in a cell, and the maximum number of transmitted SS/PBCH blocks within a half frame is $L_{max}$

For operation without shared spectrum channel access, $\overline{L}_{max} = L_{max}$, and $L_{max}$ is as described in 3GPP TS 38.104; otherwise, for operation with shared spectrum channel access, $\overline{L}_{max} = 10$ for 15 kHz SCS of SS/PBCH blocks, and

$\overline{L}_{max}$ = 20 for 30 kHz SCS of SS/PBCH blocks.

For $\overline{L}_{max}$ = 4, a UE determines the 2 Least Significant Bits of a candidate SS/PBCH block index per half frame from a one-to-one mapping with an index of the DM-RS sequence transmitted in the PBCH as described in 3GPP TS 38.211.

For $\overline{L}_{max}$ > 4, a UE determines the 3 Least Significant Bits of a candidate SS/PBCH block index per half frame from a one-to-one mapping with an index of the DM-RS sequence transmitted in the PBCH, as described in 3GPP TS 38.211.

For $\overline{L}_{max}$ = 10, the UE determines the 1 Most Significant Bit of the candidate SS/PBCH block index from PBCH payload bit $\overline{a}_{\overline{A}+7}$, as described in 3GPP TS 38.212.

For $\overline{L}_{max}$ = 20, the UE determines the 2 Most Significant Bits of the candidate SS/PBCH block index from PBCH payload bits $\overline{a}_{\overline{A}+6}$, $\overline{a}_{\overline{A}+7}$, as described in 3GPP TS 38.212.

For $\overline{L}_{max}$ = 64, the UE determines the 3 Most Significant Bits of the candidate SS/PBCH block index from PBCH payload bits $\overline{a}_{\overline{A}+5}$, $\overline{a}_{\overline{A}+6}$, $\overline{a}_{\overline{A}+7}$, as described in 3GPP TS 38.212.

A UE can be provided per serving cell by *ssb-periodicityServingCell* a periodicity of the half frames for reception of the SS/PBCH blocks for the serving cell. If the UE is not configured a periodicity of the half frames for receptions of the SS/PBCH blocks, the UE assumes a periodicity of a half frame. A UE assumes that the periodicity is same for all SS/PBCH blocks in the serving cell.

For initial cell selection, a UE may assume that half frames with SS/PBCH blocks occur with a periodicity of 2 frames. For operation without shared spectrum channel access, an SS/PBCH block index is same as a candidate SS/PBCH block index.

For operation with shared spectrum channel access, a UE assumes that transmission of SS/PBCH blocks in a half frame is within a discovery burst transmission window that starts from the first symbol of the first slot in a half-frame. The UE can be provided per serving cell by *DiscoveryBurst-WindowLength-r16* a duration of the discovery burst transmission window. If *DiscoveryBurst-WindowLength-r16* is not provided, the UE assumes that the duration of the discovery burst transmission window is a half frame.

For a serving cell, the UE assumes that a periodicity of the discovery burst transmission window is same as a periodicity of half frames for receptions of SS/PBCH blocks in the serving cell. The UE assumes that one or more SS/PBCH blocks indicated by *ssb-PositionsInBurst* may be transmitted within the discovery burst transmission window and have candidate SS/PBCH blocks indexes corresponding to SS/PBCH block indexes provided by *ssb-PositionsInBurst.* If the Most Significant Bit ("MSB") *k*, where *k* ≥ 1, of *ssh-PositionsInBurst* is set to 1, the UE assumes that one or more SS/PBCH blocks within the discovery burst transmission window with candidate SS/PBCH block indexes corresponding to SS/PBCH block index equal to *k* - 1 may be transmitted; if MSB *k* is set to 0, the UE assumes that the SS/PBCH block(s) are not transmitted.

For operation with shared spectrum channel access, a UE assumes that SS/PBCH blocks in a serving cell that are within a same discovery burst transmission window or across discovery burst transmission windows are quasi co-located with respect to average gain, QCL-TypeA, and QCL-TypeD properties, when applicable (see, e.g., 3GPP TS 38.214), if a value of $\left( N_{DM-RS}^{PBCH} \bmod N_{SSB}^{QCL} \right)$ is same among the SS/PBCH blocks. $N_{DM-RS}^{PBCH}$ is an index of a DM-RS sequence transmitted in a PBCH of a corresponding SS/PBCH block, and $N_{SSB}^{QCL}$ is either provided by *ssbPositionQCL-Relationship-r16* or, if *ssbPositionQCL-Relationship-r16* is not provided, obtained from a *MIB* provided by a SS/PBCH block according to Table 1 (below) with $k_{SSB}$ < 24. The parameter *ssbSubcarrierSpacingCommon* indicates SCS of Remaining Minimum System Information ("RMSI") only for the case of operation without shared spectrum channel access. The UE assumes that within a discovery burst transmission window, a number of transmitted SS/PBCH blocks on a serving cell is not larger than $N_{SSB}^{QCL}$. The UE can determine an SS/PBCH block index according to $\left( N_{DM-RS}^{PBCH} \bmod N_{SSB}^{QCL} \right)$, or according to $\left( \overline{i} \bmod N_{SSB}^{QCL} \right)$ where $\overline{i}$ is the candidate SS/PBCH block index.

**Table 1: Mapping between the combination of subCarrierSpacingCommon and [spare or LSB of ssb-SubcarrierOffset] to**

| subCarrierSpacingCommon | [spare or Least Significant Bit ("LSB") of ssb-SubcarrierOffset] | $N_{SSB}^{QCL}$ |
|---|---|---|
| scs15or60 | 0 | 1 |
| scs15or60 | 1 | 2 |
| scs30or120 | 0 | 4 |
| scs30or120 | 1 | 8 |

$N_{SSB}^{QCL}$

Upon detection of a SS/PBCH block, the UE determines from *MIB* that a Control Resource Set ("CORESET") for Type0-PDCCH Common Search Space ("CSS") set (e.g., as described in clause 13 of TS 38.213) is present if $k_{SSB} \leq 23$ (see, e.g., 3GPP TS 38.211) for Frequency Range #1 ("FR1," i.e., frequencies from 410 MHz to 7125 MHz) or if $k_{SSB} \leq 11$ for FR2. The UE determines from *MIB* that a CORESET for Type0-PDCCH CSS set is not present if $k_{SSB} > 23$ for FR1 or if $k_{SSB}$ > 11 for FR2; the CORESET for Type0-PDCCH CSS set may be provided by *PDCCH-ConfigCommon.*

For a serving cell without transmission of SS/PBCH blocks, a UE acquires time and frequency synchronization with the serving cell based on receptions of SS/PBCH blocks on the Primary Cell ("PCell"), or on the Primary Secondary Cell ("PSCell"), or on a Secondary Cell ("SCell") if applicable (e.g., as described in 3GPP TS 38.133), of the cell group for the serving cell.

### Regarding System Information

System Information ("SI") is divided into the Master Information Block ("MIB") and a number of System Information Blocks ("SIBs") and positioning System Information Blocks ("posSIBs"). The *MIB* is always transmitted on the Broadcast Channel ("BCH") transport channel and the PBCH physical channel with a periodicity of 80 ms and repetitions made within 80 ms (e.g., as in 3GPP TS 38.212, clause 7.1) and it includes parameters that are needed to acquire *SIB1* from the cell. The first transmission of the *MIB* is scheduled in subframes as defined in 3GPP TS 38.213, clause 4.1 and repetitions are scheduled according to the period of SSB.

The first System Information Block (i.e., SIB1) is transmitted on the Downlink Shared Channel ("DL-SCH") transport channel with a periodicity of 160 ms and variable transmission repetition periodicity within 160 ms, e.g., as specified in 3GPP TS 38.213, clause 13. The default transmission repetition periodicity of *SIB1* is 20 ms but the actual transmission repetition periodicity is up to network implementation. For SSB and CORESET multiplexing pattern 1, *SIB1* repetition transmission period is 20 ms. For SSB and CORESET multiplexing pattern 2/3, *SIB1* transmission repetition period is the same as the SSB period (e.g., as in 3GPP TS 38.213, clause 13).

*SIB1* includes information regarding the availability and scheduling (e.g., mapping of SIBs to SI message, periodicity, SI-window size) of other SIBs with an indication whether one or more SIBs are only provided on-demand, and, in that case, the configuration needed by the UE to perform the SI request. *SIB1* is cell-specific SIB. Note that the PHY layer 211 imposes a limit to the maximum size a SIB can take. The maximum *SIB1* or *SI message* size is 2976 bits.

### [Fig 4]

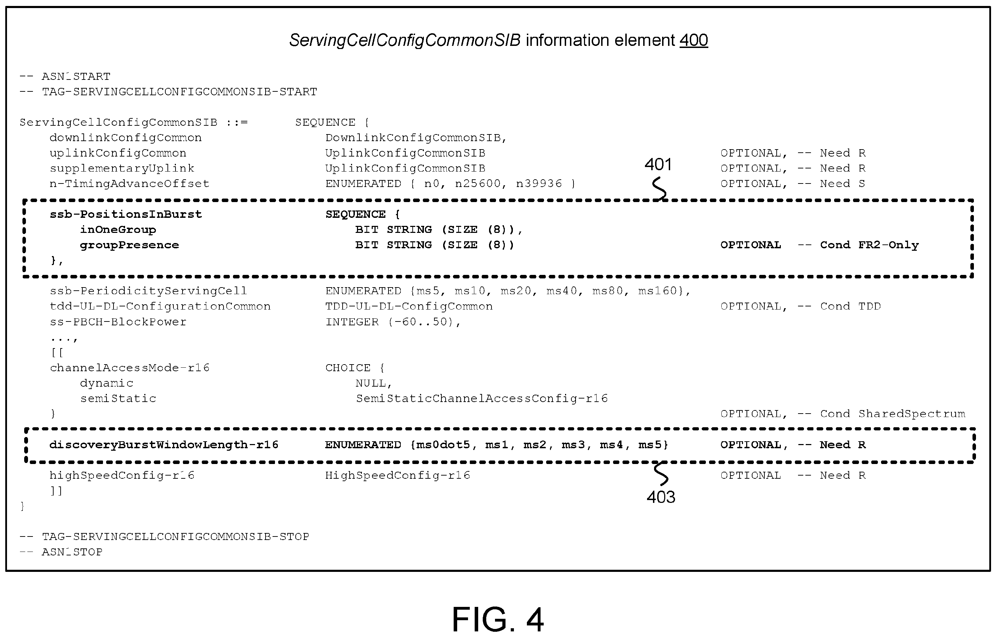

Figure 4 depicts one example of the *ServingCellConfigCommonSIB* information element 400. The IE *Serving-CellConfigCommonSIB* is used to configure cell specific parameters of a UE's serving cell in SIB1. Of particular relevance to flexible SS/PBCH transmission are the parameters *ssb-PositionsInBurst* 401 and *discoveryBurstWindowLength* 403.

The parameter *ssb-PositionsInBurst:* 401 parameter indicates time domain positions of the transmitted SS-blocks in an SS-burst (e.g., as defined in TS 38.213, clause 4.1). For operation with shared spectrum channel access, only *mediumBitmap* is used. The UE assumes that a bit at position $k > N_{SSB}^{QCL}$ is 0, where $N_{SSB}^{QCL}$ is obtained from MIB (e.g., as specified in TS 38.213, clause 4.1). For operation with shared spectrum channel access, only *inOneGroup* is used and the UE interprets this field same as *mediumBitmap* in *ServingCellConfigCommon.*

Regarding the field *inOneGroup,* when maximum number of SS/PBCH blocks per half frame equals to 4 (e.g., as defined in TS 38.213, clause 4.1), only the 4 leftmost bits are valid; the UE ignores the 4 rightmost bits. When maximum number of SS/PBCH blocks per half frame equals to 8 (e.g., as defined in TS 38.213, clause 4.1), all 8 bits are valid. The first/ leftmost bit corresponds to SS/PBCH block index 0, the second bit corresponds to SS/PBCH block index 1, and so on.

When maximum number of SS/PBCH blocks per half frame equals to 64 (e.g., as defined in TS 38.213, clause 4.1), all 8 bit are valid; The first/ leftmost bit corresponds to the first SS/PBCH block index in the group (i.e., to SSB index 0, 8, and so on); the second bit corresponds to the second SS/PBCH block index in the group (i.e., to SSB index 1, 9, and so on), and so on. Value 0 in the bitmap indicates that the corresponding SS/PBCH block is not transmitted while value 1 indicates that the corresponding SS/PBCH block is transmitted.

Regarding the field *groupPresence,* this field is present when maximum number of SS/PBCH blocks per half frame equals to 64 (e.g., as defined in TS 38.213, clause 4.1). The first/leftmost bit corresponds to the SS/PBCH index 0-7, the second bit corresponds to SS/PBCH block 8-15, and so on. Value 0 in the bitmap indicates that the SSBs according to *inOneGroup* are absent. Value 1 indicates that the SS/PBCH blocks are transmitted in accordance with *inOneGroup.*

The parameter *discoveryBurstWindowLength* 403 indicates the window length of the discovery burst in ms (see 3GPP TS 37.213).

*Solutions*

In some embodiments, a network entity (e.g., the RAN node 207) may flexibly change a set of actually transmitted SS/PBCH blocks ("SSBs") out of a set of predefined SSB candidate positions based on the spatial distribution of UEs (e.g., for RRC connected mode UEs), for example based on predicted (or estimated) UE locations. In one example, the RAN uses knowledge of UE spatial distribution (e.g., office parks, residential area etc.) for different times of a day . In various embodiments, the network entity may estimate current UE locations using 3GPP/non-3GPP positioning technologies, various sensors, e.g., radar and camera, predict future UE locations based on estimated UEs' movement directions and speeds (additionally using artificial intelligence and/or machine learning), and adjust a SSB transmission pattern within a half frame accordingly.

In another implementation, a network entity may transmit a plurality of SSBs within a half frame with different periodicities. In one example, in response to a network entity determining that there is no or few RRC connected UEs served by a set of SSBs (i.e., DL Tx beams) and/or there are very few UEs in locations related to the set of SSBs in a cell, the network entity can configure a longer periodicity (e.g., 20ms or longer) for the set of SSBs. In another example, when a network entity provides one or more Tracking Reference Signal ("TRS") occasions, which are configured for RRC connected UEs and associated (e.g., quasi-co-located) with a set of SSBs, to RRC idle/inactive UEs in a cell, the network entity can configure a longer periodicity for the set of SSBs.

*Solution #1: SSB indexes set-specific SSB periodicity*

According to embodiments of a first solution, SSB indexes correspond to set-specific SSB periodicity. Here, a UE receives information corresponding to a plurality of SSB periodicities, each SSB periodicity is applicable to a subset of SSB indexes within a half frame. In one implementation, the number of subsets of SSB indexes within a half frame are determined based on the maximum number of SSB indexes within a half frame.

In one embodiment, a UE receives information corresponding to a plurality of SSB periodicities, each SSB periodicity is applicable to a subset of SSB indexes within a half frame. In one implementation, the maximum number of subsets of SSB indexes (e.g., denoted as $M_{max}$) within a half frame are determined based on the maximum number of SSB indexes (e.g., denoted as $L_{max}$) within a half frame. For example:

- If $L_{max} = 4$, $M_{max} = 2$ and the UE can be informed of up to 2 SSB periodicities.
- If $L_{max} = 8$, $M_{max} = 4$ and the UE can be informed of up to 4 SSB periodicities.
- If $L_{max} = 64$, $M_{max} = 8$ and the UE can be informed of up to 8 SSB periodicities.

*[Fig 5]*

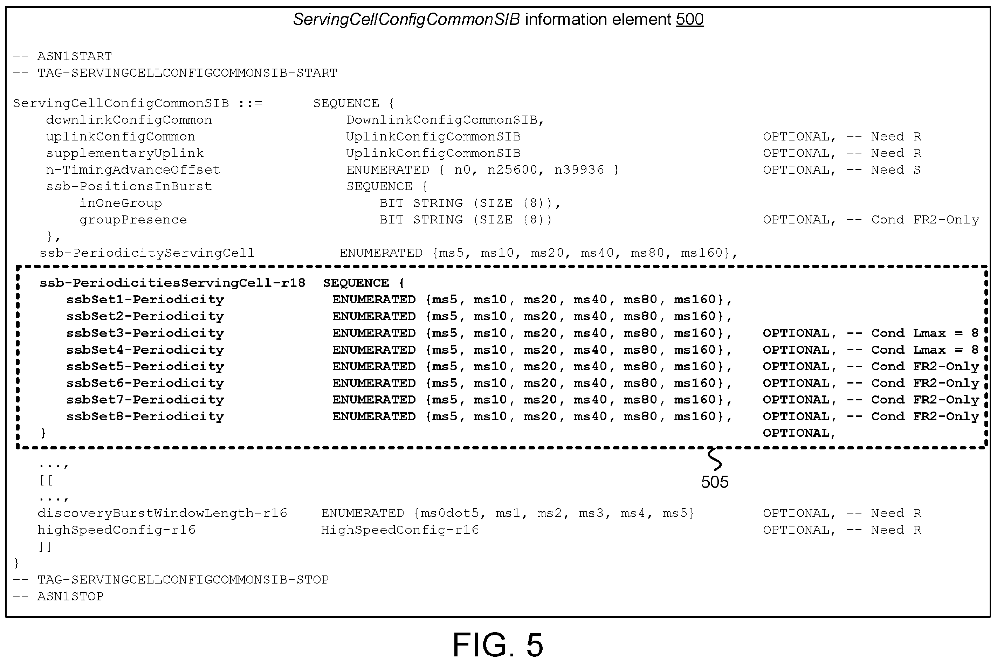

Figure 5 shows an implementation of a *ServingCellConfigCommonSIB* IE 500 that indicates multiple SSB periodicities, each specific to a subset of SSB indexes, in SIB1 (i.e., *systemInformationBlockType*1)*. The *ServingCell-ConfigCommonSIB* IE 500 includes a modification 505 to the ServingCellConfigCommonSIB information element 400, where multiple SSB periodicities are indicated, each specific to a subset of SSB indexes. The maximum number of SSB indexes within a half frame may be determined per frequency band and based on a subcarrier spacing of SSBs. A similar implementation to indicate multiple SSB periodicities, each specific to a subset of SSB indexes can be implemented within IE ServingCellConfigCommon configuring cell specific parameters of a UE's serving cell that the network provides in dedicated signaling when configuring a UE with a SCells or with an additional cell group (e.g., Secondary Cell Group ("SCG")) and for SpCells (e.g., Master Cell Group ("MCG") and SCG) upon reconfiguration with sync.

*M* is the number of SSB periodicities indicated in the IE. The SSB indices associated with a SSB periodicity can be based on the value of *M.*

In an implementation of the first solution, if a UE is not provided different SSB periodicities by higher layer parameter *ssb-PeriodicitiesServingCell-r18,* but is provided with *ssb-PeriodicityServingCell,* then the UE may assume that all SSBs in an SSB burst (e.g., half frame, discovery burst transmission window) have the same periodicity indicated by *ssb-PeriodicityServingCell.*

In one implementation of the first solution, the size of each of the subsets of the SSB indices are equal and, in this case, explicit configuration of the size of subset is not needed (equal divided). For example, when $L_{max} = 64$, $M = 8$ and the UE is informed of 8 SSB periodicities, then the size of each subset is 8, where the first subset may contain SSB indices from 0-7 (e.g., SSB indexes in the first group (associated to first/leftmost bit of field *groupPresence* in *ServingCellConfig-CommonSIB*)), followed by second subset containing SSB indices from 8-15 (e.g., SSB indexes in the second group (associated to second bit of field *groupPresence* in *ServingCellConfigCommonSIB*)), and so on till the last subset containing SSB indices from 56-63.

In an alternate implementation of the first solution, the size of each of the subsets of the SSB indices can be unequal. For example, when $L_{max} = 64$, $M = 4$ and the UE is informed of 4 SSB periodicities, then the size of each subset can be different (e.g., 32, 16, 8 and 8) where the first subset may contain SSB indices from 0-31, followed by second subset containing SSB indices from 32-47, third subset containing SSB indices from 48-55 and the last subset containing SSB indices from 56-63.

**[Fig 6]**

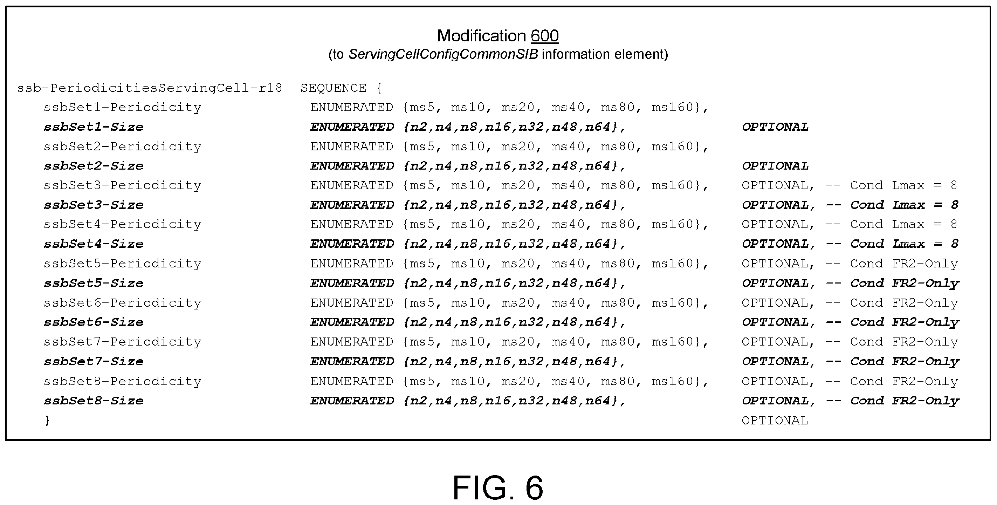

Figure 6 shows an implementation to indicate multiple SSB periodicities in SIB1 (i.e., *systemInformationBlock-Type*1), each specific to a subset of SSB indexes, according to embodiments of the first solution. Figure 6 includes a modification 600 to the ServingCellConfigCommonSIB information element 400, where the subset size is always less than the total number of SSB indices. Accordingly, the modified *ServingCellConfigCommonSIB* IE illustrated in Figure 5 can be further enhanced to indicate the size of each subset as illustrated in Figure 6, where the subset size is always less than the total number of SSB indices.

### Solution #2: Dynamic indication of transmitted SSBs in an SSB burst

According to a second solution, there is dynamic indication of transmitted SSBs in an SSB burst. After receiving semi-static information corresponding to time domain positions of a first set of transmitted SSBs in an SSB burst via SIB1 or dedicated RRC signaling, a UE further receives dynamic information corresponding to time domain positions of a second set of transmitted SSBs in an SSB burst via PDCCH. The dynamic information may be different from the semi-static information.

In Rel-15/16 NR, information corresponding to time domain positions of transmitted SSBs in an SSB burst of a cell, provided by *ssb-PositionsInBurst,* is signaled in SIB 1 (by *ServingCellConfigCommonSIB*) or in a dedicated RRC message (by *ServingCellConfigCommon).* When a network entity changes the time domain position of transmitted SSBs (e.g., by turning off a first set of SSBs and turning on a second set of SSBs) in the SSB burst or changes the SSB periodicity(s), the network entity updates SIB1 and indicates system information modification via a Short Message in paging DCI.

Upon detecting a paging DCI indicating the system information modification, a UE reacquires SIB1 and accordingly, is able to obtain the updated time domain SSB position and/or SSB periodicity(s) information. If a network entity frequently changes a SSB transmission pattern (e.g., by adding some SSBs and/or removing other SSBs as frequently as in every 160ms) in an SSB burst for network power saving, this multi-step process required in order for a UE to get the updated SSB transmission pattern may cause additional UE power consumption.

In one embodiment, a UE receives dynamic information corresponding to time domain positions of transmitted SSBs in an SSB burst and/or SSB periodicity(s) via PDCCH. The UE may further receive semi-static information corresponding to time domain positions of transmitted SSBs (i.e., a semi-statically configured SSB transmission pattern) in an SSB burst. The dynamic information may be different from the semi-static information.

**[Fig 7A]**

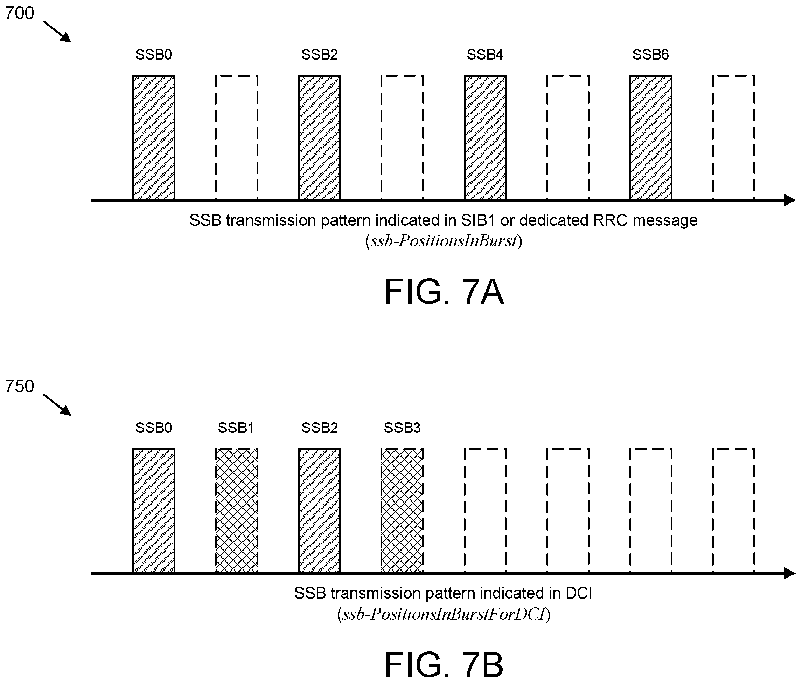

Figure 7A depicts an exemplary SSB transmission pattern 700, according to embodiments of the disclosure. Here it is assumed that the SSB transmission pattern 700 is indicated using semi-static information, for example included in SIB1 or sent to a UE in a dedicated RRC message.

**[Fig 7B]**

Figure 7B depicts an exemplary SSB transmission pattern 750, according to embodiments of the disclosure. Here it is assumed that the SSB transmission pattern 750 is indicated using dynamic information, for example sent in DCI via PDCCH.

In one implementation, a UE receives information corresponding to time domain positions of transmitted SSBs in an SSB burst by detecting a Paging Early Indication ("PEI") DCI format that indicates whether the UE should monitor paging DCI for a given paging occasion. A *ssb-PositionsInBurstForDCI*-field in the PEI DCI format is cell-specifically, UE-specifically, or UE-group specifically configured. In one example, the *ssb-PositionsInBurstForDCI*-field in the PEI DCI format comprises an *inOneGroup* field of variable size, where the size of the field is based on *Lmax,* i.e., the maximum number of SSB indices. If *Lmax* = 4, then the *inOneGroup* field is 4 bits in size. If *Lmax* = 8, then the *inOneGroup* field is 8 bits in size. However, if *Lmax* = 64, then the *inOneGroup* field is 8 bits in size and the *groupPresence* field is 8 bits.

In *inOneGroup* field, the first/leftmost bit corresponds to the first SSB index in the group (i.e., to SSB index 0, 8, and so on); the second bit corresponds to the second SSB index in the group (i.e., to SSB index 1, 9, and so on), and so on. Value '0' in the bitmap indicates that the corresponding SSB is not transmitted while Value '1' indicates that the corresponding SS/PBCH block is transmitted.

In *groupPresence* field, the first/leftmost bit corresponds to the SSB index 0-7, the second bit corresponds to SSB index 8-15, and so on. Value '0' in the bitmap indicates that the SSBs according to *inOneGroup* are absent. Value '1' indicates that the SSBs are transmitted in accordance with *inOneGroup.* In alternative implementation, if $L_{max}$ = 64, only the 8-bit *groupPresence* field exists in the PEI DCI format in order to update the group presence information.

In an example, an RRC connected mode UE receives one or more *ssb-PositionsInBurstForDCI*-field locations in a PEI (or another group-common or common search space) DCI format, each location corresponding to one of serving cell indexes. In another example, an RRC idle/inactive mode UE receives one or more *ssb-PositionsInBurstForDCI*-field locations in a PEI (or another group-common or common search space) DCI format, each location corresponding to one of cell identities.

In another implementation of the first solution, a UE receives information corresponding to time domain positions of transmitted SSBs in an SSB burst by detecting a paging DCI (i.e., a DCI format with CRC scrambled by P-RNTI).

For example, the following information is transmitted by means of the DCI format 1_0 with CRC scrambled by P-RNTI:

- Short Messages Indicator - size 2 bits according to Table 7.3.1.2.1-1 of TS 38.212.
- Extended Short Messages - size 12 bits. If only the scheduling information for Paging is carried, this bit field is reserved. Table 2 depicts an example of an Extended Short Message.
- Frequency domain resource assignment - size $\left\lceil log_2\left(N_{\mathrm{RB}}^{\mathrm{DL,BWP}}\left(N_{\mathrm{RB}}^{\mathrm{DL,BWP}}+1\right)/2\right)\right\rceil$ bits. If only the short message is carried, this bit field is reserved. Note that $N_{\mathrm{RB}}^{\mathrm{DL,BWP}}$ is the size of CORESET 0.
- Time domain resource assignment - size 4 bits as defined in Clause 5.1.2.1 of 3GPP TS 38.214. If only the short message is carried, this bit field is reserved.
- Virtual Resource Block ("VRB")-to-Physical Resource Block ("PRB") mapping - size 1 bit according to Table 7.3.1.2.2-5 of 3GPP TS 38.212. If only the short message is carried, this bit field is reserved.
- Modulation and coding scheme - size 5 bits as defined in Clause 5.1.3 of 3GPP TS 38.214, using Table 5.1.3.1-1. If only the short message is carried, this bit field is reserved.
- Transport Block ("TB") scaling - size 2 bits as defined in Clause 5.1.3.2 of 3GPP TS 38.214. If only the short message is carried, this bit field is reserved.
- Reserved bits - size 4 bits for operation in a cell with shared spectrum channel access; otherwise, size 2 bits.

**Table 2: Extended Short Messages**

| Bit | Extended Short Message |
|---|---|
| 1 | *systemInfoModification* <br> If set to 1: indication of a Broadcast Control Channel ("BCCH") logical channel modification other than SIB6, SIB7 and SIB8. |
| 2 | *etwsAndCmasIndication* <br> If set to 1: indication of an Earthquake and Tsunami Warning System ("ETWS") primary notification and/or an ETWS secondary notification and/or a Commercial Mobile Alert System ("CMAS") notification. |
| 3 | *stopPagingMonitoring* <br> This bit can be used for only operation with shared spectrum channel access and if *nrofPDCCH-Monitorin- gOccasionPerSSB-InPO* is present. <br> If set to 1: indication that the UE may stop monitoring PDCCH occasion(s) for paging in this Paging Occasion as specified in TS 38.304 [20], clause 7.1. |
| 4 | *extendedShortMsgIndication* <br> If set to 1: indication that an extended short message is present. |
| 5-12 | *ssb-PositionsInBurstForDCI* <br> Bits 5-8 for the *inOneGroup* field, if $L_{max}$ = 4 <br> Bits 5-12 for the *inOneGroup* field, if $L_{max}$ = 8 <br> Bits 5-12 for the *groupPresence* field, if $L_{max}$ = 64 |

In some examples, a non-zero value of *ssb-PositionsInBurstForDCI* (i.e., at least one bit of *ssb-PositionsIn-*

*BurstForDCI* is set (to 1)) can be used to indicate an extended short message is present without requiring an explicit *extendedShortMsgIndication* bit. In this case, the Extended Short Message can be 11-bits with bits 4-11 used for *ssb-PositionsInBurstForDCI* indication.

In another implementation of the first solution, the following information is transmitted by means of the DCI format 1_0 with CRC scrambled by P-RNTI:

- Short Messages Indicator - size 2 bits according to Table 7.3.1.2.1-1 of 3GPP TS 38.212.
- Short Messages - size 8 bits. If only the scheduling information for Paging is carried, this bit field is reserved.
- Frequency domain resource assignment - size $\lceil log_2( N_{RB}^{DL,BWP}(N_{RB}^{DL,BWP}+1)/2)\rceil$ bits. If only the short message is carried, this bit field is reserved. Note that $N_{RB}^{DL,BWP}$ is the size of CORESET 0.
- Time domain resource assignment - size 4 bits as defined in Clause 5.1.2.1 of 3GPP TS 38.214. If only the short message is carried, this bit field is reserved.
- VRB-to-PRB mapping - size 1 bit according to Table 7.3.1.2.2-5 of 3GPP TS 38.212. If only the short message is carried, this bit field is reserved.
- Modulation and coding scheme - size 5 bits as defined in Clause 5.1.3 of 3GPP TS 38.214, using Table 5.1.3.1-1. If only the short message is carried, this bit field is reserved.
- TB scaling - size 2 bits as defined in Clause 5.1.3.2 of 3GPP TS 38.214. If only the short message is carried, this bit field is reserved.
- Additional Short Messages - size 4 bits. If only the scheduling information for Paging is carried or bit 4 (the *extendedShortMsgIndication* bit) of the Short Message is not set or $L_{max} = 4$, this bit field is reserved.
- Reserved bits - size 4 bits for operation in a cell with shared spectrum channel access; otherwise, size 2 bits.

The 8-bit Short Message content is the bits 1-8 of the Extended Short Message shown in Figure 6 with bits 5-8 corresponding to the 4 leftmost bits of *ssb-PositionsInBurstForDCI*. For $L_{max} > 4$ (e.g., $L_{max} = 8$ or $L_{max} = 64$) , the 4 rightmost bits of the *ssb-PositionsInBurstForDCI* is indicated in the 4-bit Additional Short Message. In another example, the 12-bit Extended Short Message shown in Figure 6 is formed by concatenating the 8-bit Short Message and the 4-bit Additional Short Message with the 8-bit Short Message bits mapped to the leftmost 8 bits of the Extended Short Message and the 4-bit Additional Short Message mapped to the rightmost 4 bits of the Extended Short Message.

In some examples, if the *extendedShortMsgIndication* bit of the (Extended) Short Message is set (indicating an update/modification/change/indication of *ssb-PositionsInBurstForDCI* information) and DCI format 1_0 with CRC scrambled by P-RNTI received in a paging occasion in the current modification period, the UE shall apply the *ssb-PositionsInBurstForDCI* change information from the start of the next modification period. The modification period boundaries are defined by System Frame Number ("SFN") values for which SFN mod m = 0, where m is the number of radio frames comprising the modification period. The modification period is configured by system information.

Repetitions of *ssb-PositionsInBurstForDCI* change indication (or same Short Message) may occur within the current modification period. In some examples, the UE shall apply the *ssb-PositionsInBurstForDCI* change information to the stored version of *SIB1* (or valid version of stored SIB1) from the start of the next modification period. In some examples, the UE shall not be required to re-acquire SIB1 from the start of the next modification period even if it has received indication about SI modifications using Short Message transmitted with P-RNTI over DCI, i.e., if the *systemInfoModification* bit of the Short Message is set in the current modification period.

In another example, if the *extendedShortMsgIndication* bit of the (Extended) Short Message is set (indicating an update and/or modification and/or change and/or indication of *ssb-PositionsInBurstForDCI* information) and DCI format 1_0 with CRC scrambled by P-RNTI received in a paging occasion in the current *defaultPagingCycle* (e.g., default Discontinuous Reception ("DRX") value broadcast in system information), the UE shall apply the *ssb-PositionsInBurst-ForDCI* change information from the start of the next *defaultPagingCycle.* The *defaultPagingCycle* boundaries may be defined by SFN values for which SFN mod m = 0, where m is the number of radio frames comprising the *defaultPaging-Cycle.* The *defaultPagingCycle* is configured by system information.

Repetitions of *ssb-PositionsInBurstForDCI* change indication (or same Short Message) may occur within current *defaultPagingCycle.* In some examples, the UE shall apply the *ssb-PositionsInBurstForDCI* change information to the stored version of *SIB1* (or valid version of stored SIB1) from the start of the next *defaultPagingCycle.* In some examples, the UE shall not be required to re-acquire *SIB1* from the start of the next modification period even if it has received indication about SI modifications using Short Message transmitted with P-RNTI over DCI, i.e., if the *systemInfoModification* bit of the Short Message is set in the current *defaultPagingCycle.*

In yet another implementation, a UE receives information corresponding to time domain positions of transmitted SSBs in an SSB burst by detecting a DCI format with CRC scrambled by SI-RNTI.

For example, the following information is transmitted by means of the DCI format 1_0 with CRC scrambled by SI-RNTI:

- Frequency domain resource assignment - size $\lceil log_2( N_{\mathrm{RB}}^{\mathrm{DL,BWP}}(N_{\mathrm{RB}}^{\mathrm{DL,BWP}} + 1)/2)\rceil$ bits. Note that $N_{\mathrm{RB}}^{\mathrm{DL,BWP}}$ is the size of CORESET 0.
- Time domain resource assignment - size 4 bits as defined in Clause 5.1.2.1 of 3GPP TS 38.214.
- VRB-to-PRB mapping - size 1 bit according to Table 7.3.1.2.2-5 of 3GPP TS 38.212.
- Modulation and coding scheme - size 5 bits as defined in Clause 5.1.3 of 3GPP TS 38.214, using Table 5.1.3.1-1.
- Redundancy version - size 2 bits as defined in Table 7.3.1.1.1-2 of 3GPP TS 38.212.
- System information indicator - size 1 bit as defined in Table 7.3.1.2.1-2 of 3GPP TS 38.212.
- SSB positions in burst for DCI - size 8 bits. If $L_{max}$ = 4, the first/leftmost 4 bits are used, and the remaining 4 bits are reserved.
- Reserved bits - size 9 bits for operation in a cell with shared spectrum channel access; otherwise, size 7 bits.

In some examples, the SSB positions in burst for DCI bit field is reserved if the System information indicator bit field indicates SIB1.

In some examples, a non-zero value of SSB positions in burst for DCI field (i.e., at least one bit of SSB positions in burst for DCI is set (to 1)) can be used to indicate a SSB positions in burst change information.

In some examples, if SSB positions in burst change information is received in DCI format 1_0 with CRC scrambled by SI-RNTI in the current modification period, the UE shall apply the SSB positions in burst change information from the start of the next modification period. In some examples, the UE shall apply the SSB positions in burst change information to the stored version of *SIB1* (or valid version of stored SIB1) from the start of the next modification period.

In another examples, if SSB positions in burst change information is received in DCI format 1_0 with CRC scrambled by SI-RNTI in the current *defaultPagingCycle* (e.g., default DRX value broadcast in system information), the UE shall apply the SSB positions in burst change information from the start of the next *defaultPagingCycle*. In some examples, the UE shall apply the SSB positions in burst change information to the stored version of SIB1 (or valid version of stored SIB1) from the start of the next *defaultPagingCycle.*

In some implementation, if the network indicates that one set of SSB beams (or SSB indexes) will not be transmitted anymore that were earlier transmitted, then the resources configured for those one set of SSB beams can be reassigned (for reduced periodicity and/or repetition) to a second set of SSB beams that are indicated to be transmitted.

In one embodiment, a UE receives dynamic information corresponding to periodicities of transmitted SSBs (subsets) in an SSB burst via PDCCH. The UE may further receive semi-static information corresponding to periodicities of transmitted SSBs (subsets) (i.e., semi-statically configured SSB subsets periodicities) in an SSB burst. The dynamic information may be different from the semi-static information.

In one implementation, a 3-bit field for either entire set of SSB indexes or for each of the subsets of SSB indexes can be introduced in the DCI (e.g., in PEI DCI format) to dynamically indicate one of the periodicity value from 5ms, 10ms, 20ms, 40ms, 80ms and 160ms. In some implementation, the dynamically indicated periodicity value can only be increased in relation to the periodicity that has been indicated in the *ServingCellConfigCommonSIB*. For example, if the initially indicated periodicity for all SSBs/ one SSB beam/ SSB subset is 40ms, then the dynamically indicated value for the periodicity can be either 80ms or 160ms, but not a shorter periodicity value such as 5ms, 10ms, or 20ms.

In some examples, a UE received dynamic information (e.g., SSB positions in burst for DCI *ssb-PositionsIn-BurstForDCI* field) corresponding to time domain positions of transmitted SSBs in an SSB burst may only be a subset of the received semi-static information (e.g., *ssb-PositionsInBurst* in *SIB1*) corresponding to time domain positions of transmitted SSBs in the SSB burst, i.e., a SSB indicated as a transmitted SSBs in the semi-static information can only be indicated as a transmitted SSB or not transmitted SSB in the dynamic information.

### Solution #3: PRACH resource association with dynamically indicated SSB indexes

According to a third solution, there is PRACH resource association with dynamically indicated SSB indexes. Here, a UE identifies first at least one SSB index that is indicated as being transmitted in semi-static information but is indicated as being not transmitted in dynamic information. Further, the UE identifies a plurality of sets of PRACH resources, each set of PRACH resources associated with each of the first at least one SSB index. Upon determining that second at least one SSB index is indicated as being not transmitted in the semi-static information but is indicated as being transmitted in the dynamic information, the UE maps each of the second at least one SSB index to each set of PRACH resources that was associated with each of the first at least one SSB index.

In Rel-15/16 NR, a network entity configures a number of contention based preambles per SSB index per valid PRACH occasion for all SSB indexes corresponding to transmitted SSBs (by *ssb-perRACH-OccasionAndCB-PreamblesPerSSB* for Type-1 random access procedure, *msgA-SSB-PerRACH-OccasionAndCB-PreamblesPerSSB* for Type-2 random access procedure with separate configuration of PRACH occasions, or *msgA-CB-PreamblesPerSSB-PerSharedRO* for Type-2 random access procedure with common configuration of PRACH occasions with Type-1 random access procedure). Further, the network entity configures each SSB index to be mapped to the same number of one or multiple consecutive valid PRACH occasions for all SSB indexes corresponding to transmitted SSBs.

According to 3GPP TS 38.213, SSB indexes corresponding to actually transmitted SSBs are mapped to valid PRACH occasions in the following order:

- First, in increasing order of preamble indexes within a single PRACH occasion.

- Second, in increasing order of frequency resource indexes for frequency multiplexed PRACH occasions.

- Third, in increasing order of time resource indexes for time multiplexed PRACH occasions within a PRACH slot.

- Fourth, in increasing order of indexes for PRACH slots.

An association period, starting from frame 0, for mapping SS/PBCH block indexes to PRACH occasions is the smallest value in the set determined by the PRACH configuration period according to Table 3 such that $N_{\text{Tx}}^{\text{SSB}}$ SS/PBCH block indexes are mapped at least once to the PRACH occasions within the association period, where a UE obtains $N_{\text{Tx}}^{\text{SSB}}$ from the value of *ssb-PositionsInBurst* in *SIB1* or in *ServingCellConfigCommon*.

If after an integer number of SS/PBCH block indexes to PRACH occasions mapping cycles within the association period there is a set of PRACH occasions or PRACH preambles that are not mapped to $N_{\text{Tx}}^{\text{SSB}}$ SS/PBCH block indexes, no SS/PBCH block indexes are mapped to the set of PRACH occasions or PRACH preambles. An association pattern period includes one or more association periods and is determined so that a pattern between PRACH occasions and SS/PBCH block indexes repeats at most every 160 msec. PRACH occasions not associated with SS/PBCH block indexes after an integer number of association periods, if any, are not used for PRACH transmissions.

**Table 3: Mapping between PRACH configuration period and SS/PBCH block to PRACH occasion association period**

| PRACH configuration period (msec) | Association period (number of PRACH configuration periods) |
| --- | --- |
| 10 | {1, 2, 4, 8, 16} |
| 20 | {1, 2, 4, 8} |
| 40 | {1, 2, 4} |
| 80 | {1, 2} |
| 160 | {1} |

If a network entity frequently changes a SSB transmission pattern (e.g., by adding some SSBs and/or removing other SSBs as frequently as in every 160ms) in an SSB burst for network power saving and if a UE may have to determine mapping of SSB to PRACH resources (i.e., PRACH occasions and PRACH preambles) upon every change of the SSB transmission pattern, frequent updating of the SSB transmission pattern may cause additional UE power consumption and/or UE complexity.

In one embodiment, a UE compares received dynamic information corresponding to time domain positions of transmitted SSBs in an SSB burst with received semi-static information corresponding to time domain positions of transmitted SSBs in the SSB burst. The UE identifies first at least one SSB index that is indicated as being transmitted in the semi-static information but is indicated as being not transmitted in the dynamic information. Further, the UE identifies a plurality of sets of PRACH resources, each set of PRACH resources associated with each of the first at least one SSB index.

Upon determining that second at least one SSB index is indicated as being not transmitted in the semi-static information but is indicated as being transmitted in the dynamic information, the UE maps each of the second at least one SSB index to each set of PRACH resources that was associated with each of the first at least one SSB index. That is, a set of PRACH resources used to be associated with an SSB index of the first at least one SSB index is reassigned to an SSB index of the second at least one SSB index.

*[Figs 8]*

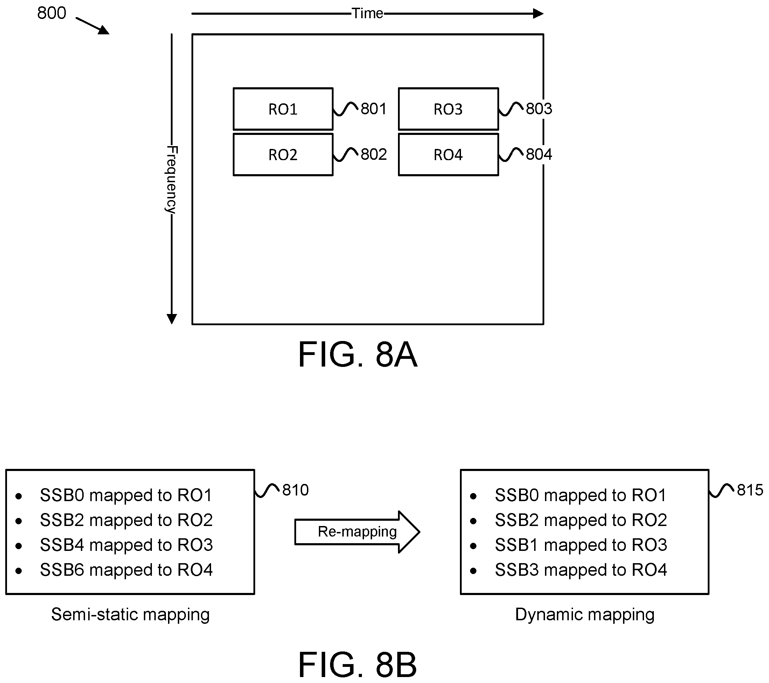

Figures 8A-8B depict a remapping of PRACH occasions to newly added SSBs. Figure 8A is a diagram illustrating one embodiment of PRACH occasions, according to embodiments of the disclosure. As depicted, there are four RACH Occasions ("ROs") distributed in time and frequency. Specifically, the scenario of Figure 8A-8B assume a Random Access Channel ("RACH") Occasion #1 ("RO1") 801, RACH Occasion #2 ("RO2") 802, RACH Occasion #3 ("RO3") 803, and RACH Occasion #4 ("RO4") 804.

In Figure 8B, a first mapping 810 is associated with first information received at the UE (here, corresponding to the SSB transmission pattern 700). The four SSB indexes (SSB0, SSB2, SSB4, and SSB6) of the SSB transmission pattern are mapped to four PRACH occasions, i.e., SSB0 is mapped to RACH Occasion #1 ("RO1"), SSB1 is mapped to RACH Occasion #2 ("RO2"), SSB2 is mapped to RACH Occasion #3 ("RO3"), and SSB3 is mapped to RACH Occasion #4 ("RO4"), according to RRC configuration (e.g., SIB1).

However, when the SSB transmission pattern changes, i.e., if DCI indicates that SSB4 and SSB6 will not be transmitted in a next paging cycle and that SSB1 and SSB3 will be transmitted in the next paging cycle, then the UE re-maps the RACH occasions to the new SSB transmission pattern (here, corresponding to SSB transmission pattern 750). According to the modified mapping 815, the UE determines that SSB1 is mapped to RO3 and SSB3 is mapped to RO4. Note that SSB0 is still mapped to RO1 and SSB2 is still mapped to RO2.

In an implementation, the UE is not expected that the number of the first at least one SSB index is smaller than the number of the second at least one SSB index. That is, in the dynamic indication, the number of dynamically added SSB indexes for transmitted SSBs (i.e., added to SSB indexes for transmitted SSBs in the semi-static information) is expected to be equal to or less than the number of dynamically removed SSB indexes (i.e., removed from the SSB indexes for the transmitted SSBs in the semi-static information).

In another implementation, if the number of the first at least one SSB index is smaller than the number of the second at least one SSB index and/or if the UE receives a separate PRACH resource configuration (or a separate random-access parameters), e.g., receiving *rach-ConfigGeneric-r18* in *RACH-ConfigCommon,* the UE determines association of an SSB index of the second at least one SSB index with one or more PRACH resources based on the separate PRACH resource configuration (or the separate random-access parameters).

The above implementations guarantee that dynamic change of transmitted SSBs in an SSB burst does not lead to changes of an association period and an association pattern period for SSB index-to-PRACH resource mapping. That is, UE complexity, UE power consumption, and legacy UE operation will not be impacted by dynamic change of transmitted SSBs in an SSB burst.

***[[Additional Background]]***

Further regarding cell search, for a half frame with SS/PBCH blocks, the first symbol indexes for candidate SS/PBCH blocks are determined according to the SCS of SS/PBCH blocks as follows, where index 0 corresponds to the first symbol of the first slot in a half-frame.

For Case A, having 15 kHz SCS, the first symbols of the candidate SS/PBCH blocks have indexes of $\{2, 8\} + 14 \cdot n.$ For operation without shared spectrum channel access, $n = 0, 1$ for carrier frequencies smaller than or equal to 3 GHz. For operation without shared spectrum channel access and for carrier frequencies within FR1 larger than 3 GHz, then $n = 0, 1, 2, 3$. However, for operation with shared spectrum channel access, as described in 3GPP TS 37.213, then $n = 0,1, 2, 3, 4$.

For Case B, having 30 kHz SCS, the first symbols of the candidate SS/PBCH blocks have indexes $\{4, 8, 16, 20\} + 28 \cdot n.$ For carrier frequencies smaller than or equal to 3 GHz, $n = 0$. For carrier frequencies within FR1 larger than 3 GHz, $n = 0, 1$.

For Case C, having 30 kHz SCS, the first symbols of the candidate SS/PBCH blocks have indexes $\{2, 8\} + 14 \cdot n.$ For operation without shared spectrum channel access and for paired spectrum operation, for carrier frequencies smaller than or equal to 3 GHz, $n = 0, 1$, and for carrier frequencies within FR1 larger than 3 GHz, $n = 0, 1, 2, 3$. Otherwise, for unpaired spectrum operation without shared spectrum channel access, for carrier frequencies smaller than or equal to 2.4 GHz, $n = 0, 1$. For carrier frequencies within FR1 larger than 2.4 GHz, $n = 0,1, 2, 3$. Else, for operation with shared spectrum channel access, $n = 0,1,2,3,4,5,6,7,8,9$.

For Case D, having 120 kHz SCS, the first symbols of the candidate SS/PBCH blocks have indexes $\{4, 8, 16, 20\} + 28 \cdot n.$ For carrier frequencies within FR2, $n = 0, 1, 2, 3, 5, 6,7, 8, 10, 11, 12, 13, 15, 16, 17, 18$.

For Case E, having 240 kHz SCS, the first symbols of the candidate SS/PBCH blocks have indexes $\{8, 12, 16, 20, 32, 36, 40, 44\} + 56 \cdot n.$ For carrier frequencies within FR2, $n = 0,1,2,3,5,6,7,8$.

From the above cases, if the Subcarrier Spacing ("SCS") of SS/PBCH blocks is not provided by *ssbSubcarrierSpacing,* the applicable cases for a cell depend on a respective frequency band, as provided in 3GPP TS 38.101-1 and 3GPP TS 38.101-2. A same case applies for all SS/PBCH blocks on the cell. If a 30 kHz SS/PBCH block SCS is indicated by *ssbSubcarrierSpacing,* Case B applies for frequency bands with only 15 kHz SS/PBCH block SCS as specified in 3GPP TS 38.101-1, and the case specified for 30 kHz SS/PBCH block SCS in 3GPP TS 38.101-1 applies for frequency bands with 30 kHz SS/PBCH block SCS or both 15 kHz and 30 kHz SS/PBCH block SCS as specified in 3GPP TS 38.101-1.

For a UE configured to operate with carrier aggregation over a set of cells in a frequency band of FR2 or with frequency-contiguous carrier aggregation over a set of cells in a frequency band of FR1, if the UE is provided SCS values by *ssbSubcarrierSpacing* for receptions of SS/PBCH blocks on any cells from the set of cells, the UE expects the SCS values to be same.

Further regarding system information, SIBs other than *SIB1* and posSIBs are carried in *SystemInformation* ("SI") messages, which are transmitted on the DL-SCH. Only SIBs or posSIBs having the same periodicity can be mapped to the same SI message. SIBs and posSIBs are mapped to the different SI messages. Each SI message is transmitted within periodically occurring time domain windows (referred to as SI-windows with same length for all SI messages).

Each SI message is associated with an SI-window and the SI-windows of different SI messages do not overlap. That is, within one SI-window only the corresponding SI message is transmitted. An SI message may be transmitted a number of times within the SI-window. Any SIB or posSIB except *SIB1* can be configured to be cell specific or area specific, using an indication in *SIB1*. The cell specific SIB is applicable only within a cell that provides the SIB while the area specific SIB is applicable within an area referred to as SI area, which consists of one or several cells and is identified by *systemInformationAreaID*.

The mapping of SIBs to SI messages is configured in *schedulingInfoList,* while the mapping of posSIBs to SI messages is configured in *pos-SchedulingInfoList.* Each SIB is contained only in a single SI message and each SIB and posSIB is contained at most once in that SI message.

For a UE in RRC_CONNECTED, the network can provide system information through dedicated signaling using the *RRCReconfiguration* message, e.g., if the UE has an active BWP with no common search space configured to monitor system information, paging, or upon request from the UE.

For PSCell and SCells, the network provides the required SI by dedicated signaling, i.e., within an *RRCReconfiguration* message. Nevertheless, the UE shall acquire *MIB* of the PSCell to get SFN timing of the SCG (which may be different from MCG). Upon change of relevant SI for SCell, the network releases and adds the concerned SCell. For PSCell, the required SI can only be changed with Reconfiguration with Sync.

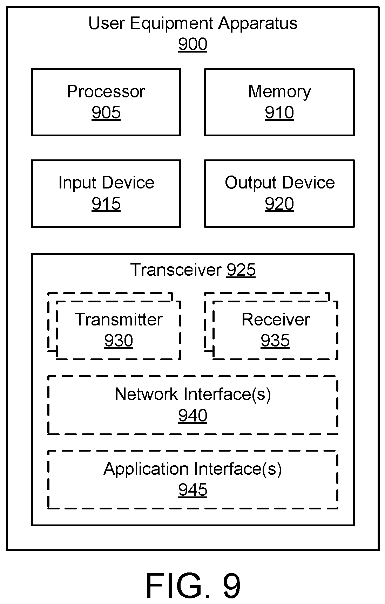

### *[[Fig 9 - UE apparatus]]*

Figure 9 depicts a user equipment apparatus 900 that may be used for flexible SS/PBCH transmission, according to embodiments of the disclosure. In various embodiments, the user equipment apparatus 900 is used to implement one or more of the solutions described above. The user equipment apparatus 900 may be one embodiment of the remote unit 105, the UE 205, and/or the user equipment apparatus 900, described above. Furthermore, the user equipment apparatus 900 may include a processor 905, a memory 910, an input device 915, an output device 920, and a transceiver 925.

In some embodiments, the input device 915 and the output device 920 are combined into a single device, such as a touchscreen. In certain embodiments, the user equipment apparatus 900 may not include any input device 915 and/or output device 920. In various embodiments, the user equipment apparatus 900 may include one or more of: the processor 905, the memory 910, and the transceiver 925, and may not include the input device 915 and/or the output device 920.

As depicted, the transceiver 925 includes at least one transmitter 930 and at least one receiver 935. In some embodiments, the transceiver 925 communicates with one or more cells (or wireless coverage areas) supported by one or more base units 121. In various embodiments, the transceiver 925 is operable on unlicensed spectrum. Moreover, the transceiver 925 may include multiple UE panels supporting one or more beams. Additionally, the transceiver 925 may support at least one network interface 940 and/or application interface 945. The application interface(s) 945 may support one or more APIs. The network interface(s) 940 may support 3GPP reference points, such as Uu, N1, PC5, etc. Other network interfaces 940 may be supported, as understood by one of ordinary skill in the art.

The processor 905, in one embodiment, may include any known controller capable of executing computer-readable instructions and/or capable of performing logical operations. For example, the processor 905 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 905 executes instructions stored in the memory 910 to perform the methods and routines described herein. The processor 905 is communicatively coupled to the memory 910, the input device 915, the output device 920, and the transceiver 925.

In various embodiments, the processor 905 controls the user equipment apparatus 900 to implement the above described UE behaviors. In certain embodiments, the processor 905 may include an application processor (also known as "main processor") which manages application-domain and operating system ("OS") functions and a baseband processor (also known as "baseband radio processor") which manages radio functions.

**[[UE behavior]]**

In various embodiments, via the transceiver 925 receives first information via higher layer signaling (e.g., *ServingCellConfigCommonSIB* or RRC *ServingCellConfigCommon)* and receives second information via physical layer signaling (e.g., PDCCH). In certain embodiments, the first information corresponds to semi-static time domain positions of a first set of transmitted SSBs in a first SSB burst. In certain embodiments, the second information corresponding to dynamic time domain positions of a second set of transmitted SSBs in a second SSB burst, where the first information is different from the second information. The processor 905 performs random access using the first information and second information.

In some embodiments, the first information includes at least one first SSB index and the second information includes at least one second SSB index. In certain embodiments, for a first set of SSB indices indicated as being transmitted by the first information, a corresponding second set of SSB indices is instead indicated by the second information as not being transmitted, where the second set of SSB indices is a subset of the first set of SSB indices.

In certain embodiments, each of a plurality of sets of PRACH resources is associated with a SSB index indicated by the first information. In such embodiments, the processor 905 further: A) identifies a third set of SSB indices indicated as not being transmitted by the first information, where a corresponding fourth set of SSB indices is instead indicated by the second information as being transmitted; B) determines an association of each of the first set of SSB indices with one of the plurality of sets of PRACH resources; and C) maps each set of PRACH resources associated with each of the second set of SSB indices to each of the fourth set of SSB indices. In certain embodiments, a number of the second set of SSB indices is equal to or larger than a number of the fourth set of SSB indices. Note that the fourth set of SSB indices is a subset of the third set of SSB indices.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the transceiver 925 further receives information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is received as a part of system information. In some embodiments, the second information is received in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

The memory 910, in one embodiment, is a computer readable storage medium. In some embodiments, the memory 910 includes volatile computer storage media. For example, the memory 910 may include a RAM, including dynamic RAM ("DRAM"), synchronous dynamic RAM ("SDRAM"), and/or static RAM ("SRAM"). In some embodiments, the memory 910 includes non-volatile computer storage media. For example, the memory 910 may include a hard disk drive, a flash memory, or any other suitable non-volatile computer storage device. In some embodiments, the memory 910 includes both volatile and non-volatile computer storage media.

In some embodiments, the memory 910 stores data related to flexible SS/PBCH transmission. For example, the memory 910 may store various parameters, panel/beam configurations, resource assignments, policies, and the like as described above. In certain embodiments, the memory 910 also stores program code and related data, such as an operating system or other controller algorithms operating on the apparatus 900.

The input device 915, in one embodiment, may include any known computer input device including a touch panel, a button, a keyboard, a stylus, a microphone, or the like. In some embodiments, the input device 915 may be integrated with the output device 920, for example, as a touchscreen or similar touch-sensitive display. In some embodiments, the input device 915 includes a touchscreen such that text may be input using a virtual keyboard displayed on the touchscreen and/or by handwriting on the touchscreen. In some embodiments, the input device 915 includes two or more different devices, such as a keyboard and a touch panel.

The output device 920, in one embodiment, is designed to output visual, audible, and/or haptic signals. In some embodiments, the output device 920 includes an electronically controllable display or display device capable of outputting visual data to a user. For example, the output device 920 may include, but is not limited to, a Liquid Crystal Display ("LCD"), a Light-Emitting Diode ("LED") display, an Organic LED ("OLED") display, a projector, or similar display device capable of outputting images, text, or the like to a user. As another, non-limiting, example, the output device 920 may include a wearable display separate from, but communicatively coupled to, the rest of the user equipment apparatus 900, such as a smart watch, smart glasses, a heads-up display, or the like. Further, the output device 920 may be a component of a smart phone, a personal digital assistant, a television, a table computer, a notebook (laptop) computer, a personal computer, a vehicle dashboard, or the like.

In certain embodiments, the output device 920 includes one or more speakers for producing sound. For example, the output device 920 may produce an audible alert or notification (e.g., a beep or chime). In some embodiments, the output device 920 includes one or more haptic devices for producing vibrations, motion, or other haptic feedback. In some embodiments, all or portions of the output device 920 may be integrated with the input device 915. For example, the input device 915 and output device 920 may form a touchscreen or similar touch-sensitive display. In other embodiments, the output device 920 may be located near the input device 915.

The transceiver 925 communicates with one or more network functions of a mobile communication network via one or more access networks. The transceiver 925 operates under the control of the processor 905 to transmit messages, data, and other signals and also to receive messages, data, and other signals. For example, the processor 905 may selectively activate the transceiver 925 (or portions thereof) at particular times in order to send and receive messages.

The transceiver 925 includes at least transmitter 930 and at least one receiver 935. One or more transmitters 930 may be used to provide UL communication signals to a base unit 121, such as the UL transmissions described herein. Similarly, one or more receivers 935 may be used to receive DL communication signals from the base unit 121, as described herein. Although only one transmitter 930 and one receiver 935 are illustrated, the user equipment apparatus 900 may have any suitable number of transmitters 930 and receivers 935. Further, the transmitter(s) 930 and the receiver(s) 935 may be any suitable type of transmitters and receivers. In one embodiment, the transceiver 925 includes a first transmitter/receiver pair used to communicate with a mobile communication network over licensed radio spectrum and a second transmitter/receiver pair used to communicate with a mobile communication network over unlicensed radio spectrum.

In certain embodiments, the first transmitter/receiver pair used to communicate with a mobile communication network over licensed radio spectrum and the second transmitter/receiver pair used to communicate with a mobile communication network over unlicensed radio spectrum may be combined into a single transceiver unit, for example a single chip performing functions for use with both licensed and unlicensed radio spectrum. In some embodiments, the first transmitter/receiver pair and the second transmitter/receiver pair may share one or more hardware components. For example, certain transceivers 925, transmitters 930, and receivers 935 may be implemented as physically separate components that access a shared hardware resource and/or software resource, such as for example, the network interface 940.

In various embodiments, one or more transmitters 930 and/or one or more receivers 935 may be implemented and/or integrated into a single hardware component, such as a multi-transceiver chip, a system-on-a-chip, an Application-Specific Integrated Circuit ("ASIC"), or other type of hardware component. In certain embodiments, one or more transmitters 930 and/or one or more receivers 935 may be implemented and/or integrated into a multi-chip module. In some embodiments, other components such as the network interface 940 or other hardware components/circuits may be integrated with any number of transmitters 930 and/or receivers 935 into a single chip. In such embodiment, the transmitters 930 and receivers 935 may be logically configured as a transceiver 925 that uses one more common control signals or as modular transmitters 930 and receivers 935 implemented in the same hardware chip or in a multi-chip module.

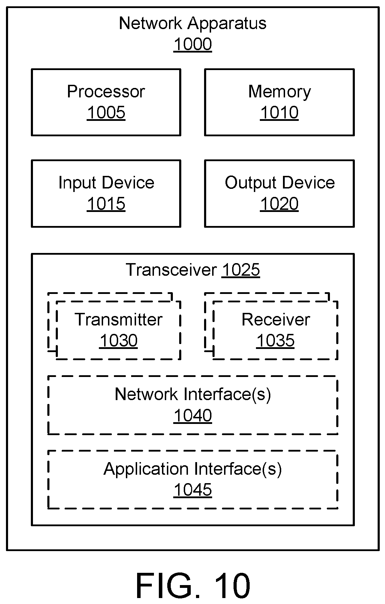

### [[Fig 10 - NW/RAN apparatus]]

Figure 10 depicts a network apparatus 1000 that may be used for flexible SS/PBCH transmission, according to embodiments of the disclosure. In one embodiment, network apparatus 1000 may be one implementation of a RAN device, such as the base unit 121, as described above. Furthermore, the network apparatus 1000 may include a processor 1005, a memory 1010, an input device 1015, an output device 1020, and a transceiver 1025.

In some embodiments, the input device 1015 and the output device 1020 are combined into a single device, such as a touchscreen. In certain embodiments, the network apparatus 1000 may not include any input device 1015 and/or output device 1020. In various embodiments, the network apparatus 1000 may include one or more of: the processor 1005, the memory 1010, and the transceiver 1025, and may not include the input device 1015 and/or the output device 1020.

As depicted, the transceiver 1025 includes at least one transmitter 1030 and at least one receiver 1035. Here, the transceiver 1025 communicates with one or more remote units 105. Additionally, the transceiver 1025 may support at least one network interface 1040 and/or application interface 1045. The application interface(s) 1045 may support one or more APIs. The network interface(s) 1040 may support 3GPP reference points, such as Uu, N1, N2 and N3. Other network interfaces 1040 may be supported, as understood by one of ordinary skill in the art.

The processor 1005, in one embodiment, may include any known controller capable of executing computer-readable instructions and/or capable of performing logical operations. For example, the processor 1005 may be a microcontroller, a microprocessor, a CPU, a GPU, an auxiliary processing unit, a FPGA, or similar programmable controller. In some embodiments, the processor 1005 executes instructions stored in the memory 1010 to perform the methods and routines described herein. The processor 1005 is communicatively coupled to the memory 1010, the input device 1015, the output device 1020, and the transceiver 1025.

In various embodiments, the network apparatus 1000 is a RAN node (e.g., gNB) that communicates with one or more UEs, as described herein. In such embodiments, the processor 1005 controls the network apparatus 1000 to perform the above described RAN behaviors. When operating as a RAN node, the processor 1005 may include an application processor (also known as "main processor") which manages application-domain and operating system ("OS") functions and a baseband processor (also known as "baseband radio processor") which manages radio functions.

## [[RAN behavior]]

In various embodiments, via the transceiver 1025, the processor 1005 configures a UE, via higher layer signaling (e.g., *ServingCellConfigCommonSIB* or RRC *ServingCellConfigCommon),* with first information corresponding to (e.g., semi-static) time domain positions of a first set of transmitted SSBs in a first SSB burst and changes a time domain position of at least one SSB. The transceiver 1025 transmits, via physical layer signaling (e.g., PDCCH), second information corresponding to (e.g., dynamic) time domain positions of a second set of transmitted SSBs in a second SSB burst, where the first information is different from the second information and where the second information indicated the changed time domain position of the at least one SSB.

In some embodiments, the first information includes at least one first SSB index and the second information includes at least one second SSB index. In certain embodiments, for a first set of SSB indices indicated as being transmitted by the first information, a corresponding second set of SSB indices is instead indicated by the second information as not being transmitted, where the second set of SSB indices is a subset of the first set of SSB indices.

In certain embodiments, for a third set of SSB indices indicated as not being transmitted by the first information, a corresponding fourth set of SSB indices, the fourth set of SSB indices being a subset of the third set of SSB indices, is instead indicated by the second information as being transmitted. In further embodiments, a number of the second set of SSB indices is equal to or larger than a number of the fourth set of SSB indices. In various embodiments, each of a plurality of sets of PRACH resources is associated with a SSB index indicated by the first information.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the transceiver 1025 further transmits information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is transmitted as a part of system information. In some embodiments, the second information is transmitted in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

The memory 1010, in one embodiment, is a computer readable storage medium. In some embodiments, the memory 1010 includes volatile computer storage media. For example, the memory 1010 may include a RAM, including dynamic RAM ("DRAM"), synchronous dynamic RAM ("SDRAM"), and/or static RAM ("SRAM"). In some embodiments, the memory 1010 includes non-volatile computer storage media. For example, the memory 1010 may include a hard disk drive, a flash memory, or any other suitable non-volatile computer storage device. In some embodiments, the memory 1010 includes both volatile and non-volatile computer storage media.

In some embodiments, the memory 1010 stores data related to flexible SS/PBCH transmission. For example, the memory 1010 may store parameters, configurations, resource assignments, policies, and the like, as described above. In certain embodiments, the memory 1010 also stores program code and related data, such as an operating system or other controller algorithms operating on the apparatus 1000.

The input device 1015, in one embodiment, may include any known computer input device including a touch panel, a button, a keyboard, a stylus, a microphone, or the like. In some embodiments, the input device 1015 may be integrated with the output device 1020, for example, as a touchscreen or similar touch-sensitive display. In some embodiments, the input device 1015 includes a touchscreen such that text may be input using a virtual keyboard displayed on the touchscreen and/or by handwriting on the touchscreen. In some embodiments, the input device 1015 includes two or more different devices, such as a keyboard and a touch panel.

The output device 1020, in one embodiment, is designed to output visual, audible, and/or haptic signals. In some embodiments, the output device 1020 includes an electronically controllable display or display device capable of outputting visual data to a user. For example, the output device 1020 may include, but is not limited to, an LCD display, an LED display, an OLED display, a projector, or similar display device capable of outputting images, text, or the like to a user. As another, non-limiting, example, the output device 1020 may include a wearable display separate from, but communicatively coupled to, the rest of the network apparatus 1000, such as a smart watch, smart glasses, a heads-up display, or the like. Further, the output device 1020 may be a component of a smart phone, a personal digital assistant, a television, a table computer, a notebook (laptop) computer, a personal computer, a vehicle dashboard, or the like.

In certain embodiments, the output device 1020 includes one or more speakers for producing sound. For example, the output device 1020 may produce an audible alert or notification (e.g., a beep or chime). In some embodiments, the output device 1020 includes one or more haptic devices for producing vibrations, motion, or other haptic feedback. In some embodiments, all or portions of the output device 1020 may be integrated with the input device 1015. For example, the input device 1015 and output device 1020 may form a touchscreen or similar touch-sensitive display. In other embodiments, the output device 1020 may be located near the input device 1015.

The transceiver 1025 includes at least transmitter 1030 and at least one receiver 1035. One or more transmitters 1030 may be used to communicate with the UE, as described herein. Similarly, one or more receivers 1035 may be used to communicate with network functions in the Public Land Mobile Network ("PLMN") and/or RAN, as described herein. Although only one transmitter 1030 and one receiver 1035 are illustrated, the network apparatus 1000 may have any suitable number of transmitters 1030 and receivers 1035. Further, the transmitter(s) 1030 and the receiver(s) 1035 may be any suitable type of transmitters and receivers.

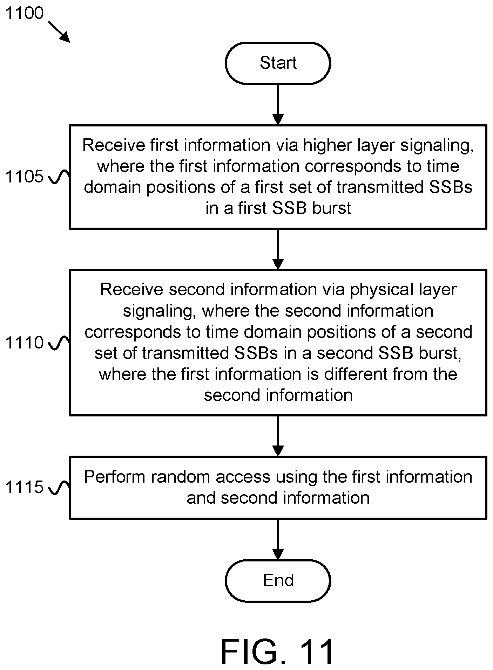

### *[[Fig 11 - UE method]]*

Figure 11 depicts one embodiment of a method 1100 for flexible SS/PBCH transmission, according to embodiments of the disclosure. In various embodiments, the method 1100 is performed by a UE device, such as the remote unit 105, the UE 205, and/or the user equipment apparatus 900, described above as described above. In some embodiments, the method 1100 is performed by a processor, such as a microcontroller, a microprocessor, a CPU, a GPU, an auxiliary processing unit, a FPGA, or the like.

The method 1100 begins and receives 1105 first information via higher layer signaling (e.g., *ServingCellConfigCommonSIB* or RRC *ServingCellConfigCommon)*. Here, the first information corresponds to time domain positions (e.g., semi-static positions) of a first set of transmitted SSBs in a first SSB burst. The method 1100 includes receiving 1110 second information via physical layer signaling (e.g., PDCCH). Here, the second information corresponds to time domain positions (e.g., dynamic positions) of a second set of transmitted SSBs in a second SSB burst, where the first information is different from the second information. The method 1100 includes performing 1115 random access using the first information and second information. The method 1100 ends.

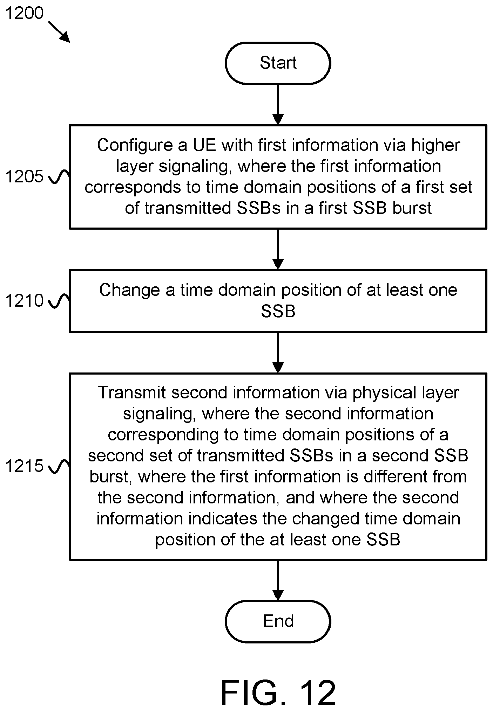

### *[[Fig 12 - NW method]]*

Figure 12 depicts one embodiment of a method 1200 for flexible SS/PBCH transmission, according to embodiments of the disclosure. In various embodiments, the method 1200 is performed by a network entity, such as the base unit 121, the RAN node 207, and/or the network apparatus 1000, described above as described above. In some embodiments, the method 1200 is performed by a processor, such as a microcontroller, a microprocessor, a CPU, a GPU, an auxiliary processing unit, a FPGA, or the like.

The method 1200 begins and configures 1205 a UE with first information via higher layer signaling (e.g., *ServingCellConfigCommonSIB* or RRC *ServingCellConfigCommon)*. Here, the first information corresponding to time domain positions (e.g., semi-static positions) of a first set of transmitted SSBs in a first SSB burst. The method 1200 includes changing 1210 a time domain position of at least one SSB. The method 1200 includes transmitting 1215 second information via physical layer signaling (e.g., PDCCH). Here, the second information corresponding to time domain positions (e.g., dynamic positions) of a second set of transmitted SSBs in a second SSB burst, where the first information is different from the second information and where the second information indicates the changed time domain position of the at least one SSB. The method 1200 ends.

### *[[Claim Statements]]*

### **[[UE apparatus]]**

Disclosed herein is a first apparatus for flexible SS/PBCH transmission, according to embodiments of the disclosure. The first apparatus may be implemented by a UE device, such as the remote unit 105, the UE 205, and/or the user equipment apparatus 900, described above. The first apparatus includes a processor coupled to a transceiver, the processor and the transceiver configured to cause the first apparatus to receive, via higher layer signaling (e.g., *ServingCellConfigCommonSIB* or RRC *ServingCellConfigCommon),* first information corresponding to (e.g., semi-static) time domain positions of a first set of transmitted SSBs in a first SSB burst and to receive, via physical layer signaling (e.g., PDCCH), second information corresponding to (e.g., dynamic) time domain positions of a second set of transmitted SSBs in a second SSB burst, where the first information is different from the second information. The first apparatus performs random access using the first information and second information.

In some embodiments, the first information includes at least one first SSB index and the second information includes at least one second SSB index, where for a first set of SSB indices indicated as being transmitted by the first information, a corresponding second set of SSB indices (the second set of SSB indices being a subset of the first set of SSB indices) is instead indicated by the second information as not being transmitted.

In certain embodiments, each of a plurality of sets of PRACH resources is associated with a SSB index indicated by the first information. In such embodiments, the first method further includes: A) identifying a third set of SSB indices indicated as not being transmitted by the first information, where a corresponding fourth set of SSB indices (the fourth set of SSB indices being a subset of the third set of SSB indices) is instead indicated by the second information as being transmitted; B) determining an association of each of the first set of SSB indices with one of the plurality of sets of PRACH resources; and C) mapping each set of PRACH resources associated with each of the second set of SSB indices to each of the fourth set of SSB indices. In certain embodiments, a number of the second set of SSB indices is equal to or larger than a number of the fourth set of SSB indices.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the first method further includes receiving information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is received as a part of system information. In some embodiments, the second information is received in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

**[[UE method]]**

Disclosed herein is a first method for flexible SS/PBCH transmission, according to embodiments of the disclosure. The first method may be performed by a UE device, such as the remote unit 105, the UE 205, and/or the user equipment apparatus 900, described above. The first method includes receiving, via higher layer signaling (e.g., *ServingCellConfigCommonSIB* or RRC *ServingCellConfigCommon),* first information corresponding to (e.g., semi-static) time domain positions of a first set of transmitted SSBs in a first SSB burst; and receiving, via physical layer signaling (e.g., PDCCH), second information corresponding to (e.g., dynamic) time domain positions of a second set of transmitted SSBs in a second SSB burst, where the first information is different from the second information. The first method includes performing random access using the first information and second information.

In some embodiments, the first information includes at least one first SSB index and the second information includes at least one second SSB index, where for a first set of SSB indices indicated as being transmitted by the first information, a corresponding second set of SSB indices (the second set of SSB indices being a subset of the first set of SSB indices) is instead indicated by the second information as not being transmitted.

In certain embodiments, each of a plurality of sets of PRACH resources is associated with a SSB index indicated by the first information. In such embodiments, the first method further includes: A) identifying a third set of SSB indices indicated as not being transmitted by the first information, where a corresponding fourth set of SSB indices (the fourth set of SSB indices being a subset of the third set of SSB indices) is instead indicated by the second information as being transmitted; B) determining an association of each of the first set of SSB indices with one of the plurality of sets of PRACH resources; and C) mapping each set of PRACH resources associated with each of the second set of SSB indices to each of the fourth set of SSB indices. In certain embodiments, a number of the second set of SSB indices is equal to or larger than a number of the fourth set of SSB indices.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the first method further includes receiving information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is received as a part of system information. In some embodiments, the second information is received in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

**[[NW apparatus]]**

Disclosed herein is a second apparatus for flexible SS/PBCH transmission, according to embodiments of the disclosure. The second apparatus may be implemented by a network entity, such as the base unit 121, the RAN node 207, and/or the network apparatus 1000, described above. The second apparatus includes a processor coupled to a transceiver, the processor and the transceiver configured to cause the second apparatus to configure a UE, via higher layer signaling (e.g., *ServingCellConfigCommonSIB* or RRC *ServingCellConfigCommon),* with first information corresponding to (e.g., semi-static) time domain positions of a first set of transmitted SSBs in a first SSB burst and to change a time domain position of at least one SSB. The second apparatus transmits, via physical layer signaling (e.g., PDCCH), second information corresponding to (e.g., dynamic) time domain positions of a second set of transmitted SSBs in a second SSB burst, where the first information is different from the second information and where the second information indicated the changed time domain position of the at least one SSB.

In some embodiments, the first information includes at least one first SSB index and the second information includes at least one second SSB index, where for a first set of SSB indices indicated as being transmitted by the first information, a corresponding second set of SSB indices (the second set of SSB indices being a subset of the first set of SSB indices) is instead indicated by the second information as not being transmitted.

In certain embodiments, for a third set of SSB indices indicated as not being transmitted by the first information, a corresponding fourth set of SSB indices, the fourth set of SSB indices being a subset of the third set of SSB indices, is instead indicated by the second information as being transmitted. In further embodiments, a number of the second set of SSB indices is equal to or larger than a number of the fourth set of SSB indices. In various embodiments, each of a plurality of sets of PRACH resources is associated with a SSB index indicated by the first information.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the second method further includes transmitting information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is transmitted as a part of system information. In some embodiments, the second information is transmitted in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

**[[NW method]]**

Disclosed herein is a second method for flexible SS/PBCH transmission, according to embodiments of the disclosure. The second method may be performed by a network entity, such as the base unit 121, the RAN node 207, and/or the network apparatus 1000, described above. The second method includes configuring a UE, via higher layer signaling (e.g., *ServingCellConfigCommonSIB* or RRC *ServingCellConfigCommon),* with first information corresponding to (e.g., semi-static) time domain positions of a first set of transmitted SSBs in a first SSB burst. The second method includes changing a time domain position of at least one SSB and transmitting, via physical layer signaling (e.g., PDCCH), second information corresponding to (e.g., dynamic) time domain positions of a second set of transmitted SSBs in a second SSB burst, where the first information is different from the second information and where the second information indicates the changed time domain position of the at least one SSB.

In some embodiments, the first information includes at least one first SSB index and the second information includes at least one second SSB index, where for a first set of SSB indices indicated as being transmitted by the first information, a corresponding second set of SSB indices (the second set of SSB indices being a subset of the first set of SSB indices) is instead indicated by the second information as not being transmitted.

In certain embodiments, for a third set of SSB indices indicated as not being transmitted by the first information, a corresponding fourth set of SSB indices, the fourth set of SSB indices being a subset of the third set of SSB indices, is instead indicated by the second information as being transmitted. In further embodiments, a number of the second set of SSB indices is equal to or larger than a number of the fourth set of SSB indices. In various embodiments, each of a plurality of sets of PRACH resources is associated with a SSB index indicated by the first information.

In some embodiments, the first information includes a first bitmap with each bit of the first bitmap corresponding to a SSB index and a value of each bit of the first bitmap indicates whether the corresponding SSB is transmitted. In one embodiment, a first/leftmost bit of *inOneGroup* field corresponds to first SSB index, a second/next-leftmost bit of *inOneGroup* field corresponds to second SSB index, and so forth. In certain embodiments, the second information includes a second bitmap with each bit of the second bitmap corresponding to a SSB index and a value of each bit of the second bitmap indicates whether the corresponding SSB is transmitted, where the information in the second bitmap overrides the first bitmap.

In some embodiments, the second method further includes transmitting information corresponding to a plurality of SSB periodicities, each SSB periodicity applicable to a subset of SSB indexes within a SSB transmission window. In certain embodiments, a number of subsets of SSB indexes within the SSB transmission window is determined based on a maximum number of SSB indexes within the SSB transmission window.

In some embodiments, the first information is transmitted as a part of system information. In some embodiments, the second information is transmitted in a PDCCH transmission. In certain embodiments, the PDCCH transmission includes a DCI format for a paging early indication that indicates whether to monitor a paging DCI on a given paging occasion. In certain embodiments, the PDCCH transmission includes a DCI format that has a CRC scrambled with a P-RNTI.

Embodiments may be practiced in other specific forms. The described embodiments are to be considered in all respects only as illustrative and not restrictive. The scope of the invention is, therefore, indicated by the appended claims rather than by the foregoing description. All changes which come within the meaning and range of equivalency of the claims are to be embraced within their scope.

**Claims**

1. A processor (905) for wireless communication by a User Equipment, UE, (105, 205, 900), the processor (905) comprising at least one controller coupled with at least one memory (910) and configured to cause the processor (905) to:

   receive (301), via higher layer signaling, first information corresponding to time domain positions of a first set of Synchronization Signal and Physical Broadcast Channel Blocks, SSBs, in a first SSB burst;
   receive (305), via physical layer signaling, second information corresponding to time domain positions of a second set of SSBs in a second SSB burst, wherein the first information is different from the second information;
   at least one of the first information and the second information including information corresponding to a plurality of SSB periodicities, each SSB periodicity being applicable to a subset of SSB indexes within a SSB transmission window; and
   perform (309) random access using the first information and second information.

2. The processor (905) of claim 1, wherein the first information comprises at least one first SSB index and the second information comprises at least one second SSB index, wherein for a first set of SSB indices indicated as being transmitted by the first information, a corresponding second set of SSB indices, the second set of SSB indices being a subset of the first set of SSB indices, is instead indicated by the second information as not being transmitted.

3. The processor (905) of claim 2, wherein each of a plurality of sets of Physical Random Access Channel, PRACH, resources is associated with a SSB index indicated by the first information, the processor (905) being configured to:

identify a third set of SSB indices indicated as not being transmitted by the first information, wherein a corresponding fourth set of SSB indices, the fourth set of SSB indices being a subset of the third set of SSB indices, is instead indicated by the second information as being transmitted;
determine an association of each of the first set of SSB indices with one of the plurality of sets of PRACH resources; and
map each set of PRACH resources associated with each of the second set of SSB indices to each of the fourth set of SSB indices.

4. The processor (905) of claim 3, wherein a number of the second set of SSB indices is equal to or larger than a number of the fourth set of SSB indices.

5. The processor (905) of claim 1, wherein the first information comprises a first bitmap with each bit of the first bitmap corresponding to a SSB index and a value of each bit of the first bitmap indicates whether the corresponding SSB is transmitted.

6. The processor (905) of claim 5, wherein the second information comprises a second bitmap with each bit of the second bitmap corresponding to a SSB index and a value of each bit of the second bitmap indicates whether the corresponding SSB is transmitted, wherein information in the second bitmap overrides the first bitmap.

7. The processor (905) of claim 1, wherein a number of subsets of SSB indexes within the SSB transmission window is determined based on a maximum number of SSB indexes within the SSB transmission window.

8. The processor (905) of claim 1, wherein the first information is received as a part of system information.

9. The processor (905) claim 1, wherein the second information is received in a Physical Downlink Control Channel, PDCCH, transmission.

10. The processor (905) of claim 9, wherein the PDCCH transmission comprises a Downlink Control Information, DCI, format for a paging early indication that indicates whether to monitor a paging DCI on a given paging occasion.

11. The processor (905) of claim 9, wherein the PDCCH transmission comprises a DCI format that has a Cyclic Redundancy Check, CRC, scrambled with a Paging Radio Network Temporary Identity, P-RNTI.

12. A method carried out by a User Equipment, UE, (105, 205, 900), the method apparatus comprising:

receiving (301), via higher layer signaling, first information corresponding to time domain positions of a first set of Synchronization Signal and Physical Broadcast Channel Blocks, SSBs, in a first SSB burst;
receiving (305), via physical layer signaling, second information corresponding to time domain positions of a second set of SSBs in a second SSB burst, wherein the first information is different from the second information;
at least one of the first information and the second information including information corresponding to a plurality of SSB periodicities, each SSB periodicity being applicable to a subset of SSB indexes within a SSB transmission window; and
performing (309) random access using the first information and second information.

13. An apparatus (1000) for a Radio Access Network for wireless communication, the apparatus (1000) comprising:
at least one memory (1010) and at least one processor (1005) coupled with the at least one memory (1010) and configured to cause the apparatus (1000) to:

configure (301) a UE (105, 205), via higher layer signaling, with first information corresponding to time domain positions of a first set of transmitted Synchronization Signal and Physical Broadcast Channel Blocks, SSBs, in a first SSB burst;
change (303) a time domain position of at least one SSB;
transmit (305), via physical layer signaling, second information corresponding to time domain positions of a second set of transmitted SSBs in a second SSB burst (307), wherein the first information is different from the second information and wherein the second information indicates the changed time domain position of the at least one SSB;

wherein at least one of the first information and the second information includes information corresponding to a plurality of SSB periodicities, each SSB periodicity being applicable to a subset of SSB indexes within a SSB transmission window.

14. The apparatus (1000) of claim 13, wherein the at least one processor (1005) is configured such that each SSB periodicity is applicable to a subset of SSB indexes within a half frame.

15. A method carried out by an apparatus (1000) for a Radio Access Network for wireless communication, the method comprising:

configuring (301) a UE (105, 205), via higher layer signaling, with first information corresponding to time domain positions of a first set of transmitted Synchronization Signal and Physical Broadcast Channel Blocks, SSBs, in a first SSB burst;

changing (303) a time domain position of at least one SSB;

transmitting (305), via physical layer signaling, second information corresponding to time domain positions of a second set of transmitted SSBs in a second SSB burst (307), wherein the first information is different from the second information and wherein the second information indicates the changed time domain position of the at least one SSB; and

transmitting information corresponding to a plurality of SSB periodicities, each SSB periodicity applicable to a subset of SSB indexes within a SSB transmission window;

wherein at least one of the first information and the second information includes information corresponding to a plurality of SSB periodicities, each SSB periodicity being applicable to a subset of SSB indexes within a SSB transmission window.

**Patentansprüche**

1. Prozessor (905) für drahtlose Kommunikation durch ein Benutzergerät (User Equipment - UE) (105, 205, 900), wobei der Prozessor (905) mindestens eine Steuerung umfasst, die mit mindestens einem Speicher (910) gekoppelt ist und konfiguriert ist, um den Prozessor (905) zu Folgendem zu veranlassen:

Empfangen (301), über eine Signalgebung einer höheren Schicht, von ersten Informationen, die Zeitbereichspositionen eines ersten Satzes von Synchronisationssignal- und physischen Rundfunkkanalblöcken (Synchronization Signal and Physical Broadcast Channel Blocks - SSBs) in einem ersten SSB-Burst entsprechen;

Empfangen (305), über eine Signalgebung der physischen Schicht, von zweiten Informationen, die Zeitbereichspositionen eines zweiten Satzes von SSBs in einem zweiten SSB-Burst entsprechen, wobei sich die ersten Informationen von den zweiten Informationen unterscheiden;

wobei mindestens eine von den ersten Informationen und den zweiten Informationen Informationen beinhaltet, die einer Vielzahl von SSB-Periodizitäten entsprechen, wobei jede SSB-Periodizität auf einen Teilsatz von SSB-Indizes innerhalb eines SSB-Übertragungsfensters anwendbar ist; und

Durchführen (309) eines Direktzugriffs unter Verwendung der ersten Informationen und der zweiten Informationen.

2. Prozessor (905) nach Anspruch 1, wobei die ersten Informationen mindestens einen ersten SSB-Index umfassen und die zweiten Informationen mindestens einen zweiten SSB-Index umfassen, wobei anstelle eines ersten Satzes von SSB-Indizes, der als durch die ersten Informationen übertragen angezeigt wird, ein entsprechender zweiter Satz von SSB-Indizes, wobei der zweite Satz von SSB-Indizes ein Teilsatz des ersten Satzes von SSB-Indizes ist, durch die zweiten Informationen als nicht übertragen angezeigt wird.

3. Prozessor (905) nach Anspruch 2, wobei jeder von einer Vielzahl von Sätzen von physischen Direktzugriffskanal(Physical Random Access Channel - PRACH)-Ressourcen einem SSB-Index zugeordnet ist, der durch die ersten Informationen angezeigt wird, wobei der Prozessor (905) zu Folgendem konfiguriert ist:

Identifizieren eines dritten Satzes von SSB-Indizes, der als durch die ersten Informationen nicht übertragen angezeigt wird, wobei ein entsprechender vierter Satz von SSB-Indizes, wobei der vierte Satz von SSB-Indizes ein Teilsatz des dritten Satzes von SSB-Indizes ist, stattdessen durch die zweiten Informationen als übertragen angezeigt wird;

Bestimmen einer Zuordnung von jedem von dem ersten Satz von SSB-Indizes zu einem der Vielzahl von Sätzen von PRACH-Ressourcen; und

Abbilden jedes Satzes von PRACH-Ressourcen, der jedem von dem zweiten Satz von SSB-Indizes zugeordnet ist, auf jeden von dem vierten Satz von SSB-Indizes.

4. Prozessor (905) nach Anspruch 3, wobei eine Anzahl des zweiten Satzes von SSB-Indizes gleich oder größer als eine Anzahl des vierten Satzes von SSB-Indizes ist.

5. Prozessor (905) nach Anspruch 1, wobei die ersten Informationen eine erste Bitmap umfassen, wobei jedes Bit der ersten Bitmap einem SSB-Index entspricht und ein Wert jedes Bits der ersten Bitmap anzeigt, ob der entsprechende SSB übertragen wird.

6. Prozessor (905) nach Anspruch 5, wobei die zweiten Informationen eine zweite Bitmap umfassen, wobei jedes Bit der zweiten Bitmap einem SSB-Index entspricht und ein Wert jedes Bits der zweiten Bitmap anzeigt, ob der entsprechende SSB übertragen wird, wobei Informationen in der zweiten Bitmap die erste Bitmap überschreiben.

7. Prozessor (905) nach Anspruch 1, wobei eine Anzahl von Teilsätzen von SSB-Indizes innerhalb des SSB-Übertragungsfensters basierend auf einer maximalen Anzahl von SSB-Indizes innerhalb des SSB-Übertragungsfensters bestimmt wird.

8. Prozessor (905) nach Anspruch 1, wobei die ersten Informationen als ein Teil von Systeminformationen empfangen werden.

9. Prozessor (905) nach Anspruch 1, wobei die zweiten Informationen in einer Übertragung über einen physischen Downlink-Steuerkanal (Physical Downlink Control Channel - PDCCH) empfangen werden.

10. Prozessor (905) nach Anspruch 9, wobei die PDCCH-Übertragung ein Downlink-Steuerungsinformations(Downlink Control Information - DCI)-Format für eine frühzeitige Funkruf-Anzeige umfasst, die anzeigt, ob eine Funkruf-DCI bei einem vorgegebenen Funkruf-Anlass überwacht werden soll.

11. Prozessor (905) nach Anspruch 9, wobei die PDCCH-Übertragung ein DCI-Format umfasst, das eine zyklische Redundanzprüfung (Cyclic Redundancy Check - CRC) aufweist, die mit einer temporären Funkruf-Funknetz-Identität (Paging Radio Network Temporary Identity - P-RNTI) verwürfelt ist.

12. Verfahren, das durch ein Benutzergerät (UE) (105, 205, 900) ausgeführt wird, wobei das Verfahren Folgendes umfasst:

Empfangen (301), über eine Signalgebung einer höheren Schicht, von ersten Informationen, die Zeitbereichspositionen eines ersten Satzes von Synchronisationssignal- und physischen Rundfunkkanalblöcken (SSBs) in einem ersten SSB-Burst entsprechen;

Empfangen (305), über eine Signalgebung der physischen Schicht, von zweiten Informationen, die Zeitbereichspositionen eines zweiten Satzes von SSBs in einem zweiten SSB-Burst entsprechen, wobei sich die ersten Informationen von den zweiten Informationen unterscheiden;

wobei mindestens eine von den ersten Informationen und den zweiten Informationen Informationen beinhaltet, die einer Vielzahl von SSB-Periodizitäten entsprechen, wobei jede SSB-Periodizität auf einen Teilsatz von SSB-Indizes innerhalb eines SSB-Übertragungsfensters anwendbar ist; und

Durchführen (309) eines Direktzugriffs unter Verwendung der ersten Informationen und der zweiten Informationen.

13. Einrichtung (1000) für ein Funkzugangsnetzwerk für drahtlose Kommunikation, wobei die Einrichtung (1000) Folgendes umfasst:

mindestens einen Speicher (1010) und mindestens einen Prozessor (1005), der mit dem mindestens einen Speicher (1010) gekoppelt ist und konfiguriert ist, um die Einrichtung (1000) zu Folgendem zu veranlassen:

Konfigurieren (301) eines UE (105, 205), über eine Signalgebung einer höheren Schicht, mit ersten Informationen, die Zeitbereichspositionen eines ersten Satzes von übertragenen Synchronisationssignal- und physischen Rundfunkkanalblöcken (SSBs) in einem ersten SSB-Burst entsprechen;

Ändern (303) einer Zeitbereichsposition von mindestens einem SSB;

Übertragen (305), über eine Signalgebung der physischen Schicht, von zweiten Informationen, die Zeitbereichspositionen eines zweiten Satzes von übertragenen SSBs in einem zweiten SSB-Burst (307) entsprechen, wobei sich die ersten Informationen von den zweiten Informationen unterscheiden und wobei die zweiten Informationen die geänderte Zeitbereichsposition des mindestens einen SSB anzeigen;

wobei mindestens eine von den ersten Informationen und den zweiten Informationen Informationen beinhaltet, die einer Vielzahl von SSB-Periodizitäten entsprechen, wobei jede SSB-Periodizität auf einen Teilsatz von SSB-Indizes innerhalb eines SSB-Übertragungsfensters anwendbar ist.

14. Einrichtung (1000) nach Anspruch 13, wobei der mindestens eine Prozessor (1005) so konfiguriert ist, dass jede SSB-Periodizität auf einen Teilsatz von SSB-Indizes innerhalb eines Halbrahmens anwendbar ist.

15. Verfahren, das durch eine Einrichtung (1000) für ein Funkzugangsnetzwerk für drahtlose Kommunikation ausgeführt wird, wobei das Verfahren Folgendes umfasst:

Konfigurieren (301) eines UE (105, 205), über eine Signalgebung einer höheren Schicht, mit ersten Informationen, die Zeitbereichspositionen eines ersten Satzes von übertragenen Synchronisationssignal- und physischen Rundfunkkanalblöcken (SSBs) in einem ersten SSB-Burst entsprechen;

Ändern (303) einer Zeitbereichsposition von mindestens einem SSB;

Übertragen (305), über eine Signalgebung der physischen Schicht, von zweiten Informationen, die Zeitbereichspositionen eines zweiten Satzes von übertragenen SSBs in einem zweiten SSB-Burst (307) entsprechen, wobei sich die ersten Informationen von den zweiten Informationen unterscheiden und wobei die zweiten Informationen die geänderte Zeitbereichsposition des mindestens einen SSB anzeigen; und

Übertragen von Informationen, die einer Vielzahl von SSB-Periodizitäten entsprechen, wobei jede SSB-Periodizität auf einen Teilsatz von SSB-Indizes innerhalb eines SSB-Übertragungsfensters anwendbar ist;

wobei mindestens eine von den ersten Informationen und den zweiten Informationen Informationen beinhaltet, die einer Vielzahl von SSB-Periodizitäten entsprechen, wobei jede SSB-Periodizität auf einen Teilsatz von SSB-Indizes innerhalb eines SSB-Übertragungsfensters anwendbar ist.

**Revendications**

1. Processeur (905) pour communication sans fil par un équipement utilisateur, UE, (105, 205, 900), le processeur (905) comprenant au moins un dispositif de commande couplé à au moins une mémoire (910) et configuré pour amener le processeur (905) à :

recevoir (301), via une signalisation de couche supérieure, des premières informations correspondant aux positions dans le domaine temporel d'un premier ensemble de blocs de signal de synchronisation et de canal de diffusion physique (SSB pour « Synchronization Signal Block ») dans une première rafale SSB ;

recevoir (305), via une signalisation de couche physique, des secondes informations correspondant aux positions dans le domaine temporel d'un deuxième ensemble de SSB dans une seconde rafale SSB, les premières informations étant différentes des secondes informations ;

au moins l'une des premières informations et des secondes informations comprenant des informations correspondant à une pluralité de périodicités SSB, chaque périodicité SSB étant applicable à un sous-ensemble d'indices SSB au sein d'une fenêtre de transmission de SSB ; et

réaliser (309) un accès aléatoire à l'aide des premières informations et des secondes informations.

2. Processeur (905) selon la revendication 1, dans lequel les premières informations comprennent au moins un premier indice SSB et les secondes informations comprennent au moins un second indice SSB, dans lequel, pour un premier ensemble d'indices SSB indiqués comme étant transmis par les premières informations, un deuxième ensemble correspondant d'indices SSB, le deuxième ensemble d'indices SSB étant un sous-ensemble du premier ensemble d'indices SSB, est au contraire indiqué par les secondes informations comme n'étant pas transmis.

3. Processeur (905) selon la revendication 2, dans lequel chacun d'une pluralité d'ensembles de ressources de canal physique d'accès aléatoire, PRACH (pour « Physical Random Access Channel »), est associé à un indice SSB indiqué par la première information, le processeur (905) étant configuré pour :

identifier un troisième ensemble d'indices SSB indiqués comme n'étant pas transmis par les premières informations, un quatrième ensemble correspondant d'indices SSB, le quatrième ensemble d'indices SSB étant un sous-ensemble du troisième ensemble d'indices SSB, étant au contraire indiqué par les secondes informations comme étant transmis ;

déterminer une association de chaque indice parmi le premier ensemble d'indices SSB avec l'un de la pluralité d'ensembles de ressources PRACH ; et

mettre en correspondance chaque ensemble de ressources PRACH associé à chaque indice parmi le deuxième ensemble d'indices SSB avec chaque indice du quatrième ensemble d'indices SSB.

4. Processeur (905) selon la revendication 3, dans lequel un nombre d'indices du deuxième ensemble d'indices SSB est égal ou supérieur à un nombre d'indices du quatrième ensemble d'indices SSB.

5. Processeur (905) selon la revendication 1, dans lequel les premières informations comprennent une première table de bits dont chaque bit de la première table de bits correspond à un indice SSB et une valeur de chaque bit de la première carte binaire indique si le SSB correspondant est transmis.

6. Processeur (905) selon la revendication 5, dans lequel les secondes informations comprennent une seconde table de bits dont chaque bit de la seconde table de bits correspond à un indice SSB et une valeur de chaque bit de la seconde table de bits indique si le SSB correspondant est transmis, dans lequel les informations contenues dans la seconde table de bits remplacent celles de la première carte binaire.

7. Processeur (905) selon la revendication 1, dans lequel un nombre de sous-ensembles d'indices SSB au sein de la fenêtre de transmission de SSB est déterminé sur la base d'un nombre maximal d'indices SSB au sein de la fenêtre de transmission de SSB.

8. Processeur (905) selon la revendication 1, dans lequel les premières informations sont reçues en tant que partie des informations système.

9. Processeur (905) selon la revendication 1, dans lequel les secondes informations sont reçues lors d'une transmission de canal physique de commande de liaison descendante, PDCCH (pour « Physical Downlink Control Channel »).

10. Processeur (905) selon la revendication 9, dans lequel la transmission de PDCCH comprend un format d'informations de commande de liaison descendante, DCI (pour « Downlink Control Information ») pour une indication précoce de radiomessagerie indiquant s'il faut surveiller une DCI de radiomessagerie lors d'un événement de radiomessagerie donné.

11. Processeur (905) selon la revendication 9, dans lequel la transmission de PDCCH comprend un format DCI présentant un contrôle de redondance cyclique, CRC (pour « Cyclic Redundancy Check ») brouillé avec un identifiant temporaire de réseau radio de radiomessagerie, P-RNTI (pour « Paging Radio Network Temporary Identifier »).

12. Procédé mis en œuvre par un équipement utilisateur, UE, (105, 105, 900), le procédé appareil comprenant :

la réception (301), via une signalisation de couche supérieure, de premières informations correspondant aux positions dans le domaine temporel d'un premier ensemble de blocs de signal de synchronisation et de canal de diffusion physique (SSB pour « Synchronization Signal Block ») dans une première rafale SSB ;

la réception (305), via une signalisation de couche physique, de secondes informations correspondant aux positions dans le domaine temporel d'un deuxième ensemble de SSB dans une seconde rafale SSB, les premières informations étant différentes des secondes informations ;

au moins l'une des premières informations et des secondes informations comprenant des informations correspondant à une pluralité de périodicités SSB, chaque périodicité SSB étant applicable à un sous-ensemble d'indices SSB au sein d'une fenêtre de transmission de SSB ; et

la réalisation (309) d'un accès aléatoire à l'aide des premières informations et des secondes informations.

13. Appareil (1000) destiné à un réseau d'accès radio pour communication sans fil, l'appareil (1000) comprenant :

au moins une mémoire (1010) et au moins un processeur (1005) couplé à l'au moins une mémoire (1010) et configuré pour amener l'appareil (1000) à :

configurer (301) un UE (105, 205), via une signalisation de couche supérieure, avec des premières informations correspondant aux positions dans le domaine temporel d'un premier ensemble de blocs de signal de synchronisation et de canal de diffusion physique, SSB (pour « Synchronization Signal Block »), transmis dans une première rafale SSB ;

modifier (303) une position dans le domaine temporel d'au moins un SSB ;

transmettre (305), via une signalisation de couche physique, des secondes informations correspondant aux positions dans le domaine temporel d'un deuxième ensemble de SSB transmis dans une seconde rafale SSB (307), les premières informations étant différentes des secondes informations et les secondes informations indiquant la position modifiée dans le domaine temporel de l'au moins un SSB ;

dans lequel au moins l'une des premières informations et des secondes informations comprend des informations correspondant à une pluralité de périodicités SSB, chaque périodicité SSB étant applicable à un sous-ensemble d'indices de SSB au sein d'une fenêtre de transmission de SSB.

14. Appareil (1000) selon la revendication 13, dans lequel l'au moins un processeur (1005) est configuré de sorte que chaque périodicité SSB s'applique à un sous-ensemble d'indices SSB au sein d'une demi-trame.

15. Procédé mis en œuvre par un appareil (1000) destiné à un réseau d'accès radio pour communication sans fil, le procédé comprenant :

la configuration (301) d'un UE (105, 301), via une signalisation de couche supérieure, avec des premières informations correspondant aux positions dans le domaine temporel d'un premier ensemble de blocs de signal de synchronisation et de canal de diffusion physique, SSB (pour « Synchronization Signal Block »), transmis dans une première rafale SSB ;

la modification (303) d'une position dans le domaine temporel d'au moins un SSB ;

la transmission (305), via une signalisation de couche physique, de secondes informations correspondant aux positions dans le domaine temporel d'un deuxième ensemble de SSB transmis dans une seconde rafale SSB (307), les premières informations étant différentes des secondes informations et les secondes informations indiquant la position modifiée dans le domaine temporel de l'au moins un SSB ; et

la transmission d'informations correspondant à une pluralité de périodicités SSB, chaque périodicité SSB étant applicable à un sous-ensemble d'indices de SSB au sein d'une fenêtre de transmission de SSB ;

dans lequel au moins l'une des premières informations et des secondes informations comprend des informations correspondant à une pluralité de périodicités SSB, chaque périodicité SSB étant applicable à un sous-ensemble d'indices de SSB au sein d'une fenêtre de transmission de SSB.

FIG. 1

EP 4 309 460 B1

**FIG. 2**

1. UE is configured by RAN node with first information of (semi-static) time domain positions for SSBs

301

2. RAN changes time domain position of at least one SSB

303

3. RAN sends second information of (dynamic) time domain positions for SSBs, the second information indicating the changed time domain position of the at least one SSB

305

4. Transmit a set of SSB (i.e., at least one SSB burst)

307

5. UE performs random access using time domain positions of SSB indicated in 1st and 2nd informations

309

300

FIG. 3

*ServingCellConfigCommonSIB* information element <u>400</u>

```
-- ASN1START
-- TAG-SERVINGCELLCONFIGCOMMONSIB-START

ServingCellConfigCommonSIB ::=        SEQUENCE {
    downlinkConfigCommon              DownlinkConfigCommonSIB,
    uplinkConfigCommon                UplinkConfigCommonSIB          OPTIONAL, -- Need R
    supplementaryUplink               UplinkConfigCommonSIB          OPTIONAL, -- Need R
    n-TimingAdvanceOffset             ENUMERATED { n0, n25600, n39936 }    401    OPTIONAL, -- Need S
    ssb-PositionsInBurst              SEQUENCE {
        inOneGroup                        BIT STRING (SIZE (8)),
        groupPresence                     BIT STRING (SIZE (8))         OPTIONAL   -- Cond FR2-Only
    },
    ssb-PeriodicityServingCell        ENUMERATED {ms5, ms10, ms20, ms40, ms80, ms160},
    tdd-UL-DL-ConfigurationCommon     TDD-UL-DL-ConfigCommon          OPTIONAL, -- Cond TDD
    ss-PBCH-BlockPower                INTEGER (-60..50),
    ...,
    [[
    channelAccessMode-r16             CHOICE {
        dynamic                           NULL,
        semiStatic                        SemiStaticChannelAccessConfig-r16
    }                                                                 OPTIONAL, -- Cond SharedSpectrum
    discoveryBurstWindowLength-r16    ENUMERATED {ms0dot5, ms1, ms2, ms3, ms4, ms5}    OPTIONAL, -- Need R
    highSpeedConfig-r16               HighSpeedConfig-r16       403    OPTIONAL  -- Need R
    ]]
}

-- TAG-SERVINGCELLCONFIGCOMMONSIB-STOP
-- ASN1STOP
```

# FIG. 4

**ServingCellConfigCommonSIB information element 500**

```
-- ASN1START
-- TAG-SERVINGCELLCONFIGCOMMONSIB-START

ServingCellConfigCommonSIB ::=      SEQUENCE {
    downlinkConfigCommon                DownlinkConfigCommonSIB,
    uplinkConfigCommon                  UplinkConfigCommonSIB                    OPTIONAL, -- Need R
    supplementaryUplink                 UplinkConfigCommonSIB                    OPTIONAL, -- Need R
    n-TimingAdvanceOffset               ENUMERATED { n0, n25600, n39936 }        OPTIONAL, -- Need S
    ssb-PositionsInBurst                SEQUENCE {
        inOneGroup                          BIT STRING (SIZE (8)),
        groupPresence                       BIT STRING (SIZE (8))               OPTIONAL, -- Cond FR2-Only
    },
    ssb-PeriodicityServingCell          ENUMERATED {ms5, ms10, ms20, ms40, ms80, ms160},
    ssb-PeriodicitiesServingCell-r18    SEQUENCE {
        ssbSet1-Periodicity                 ENUMERATED {ms5, ms10, ms20, ms40, ms80, ms160},
        ssbSet2-Periodicity                 ENUMERATED {ms5, ms10, ms20, ms40, ms80, ms160},
        ssbSet3-Periodicity                 ENUMERATED {ms5, ms10, ms20, ms40, ms80, ms160},    OPTIONAL, -- Cond Lmax = 8
        ssbSet4-Periodicity                 ENUMERATED {ms5, ms10, ms20, ms40, ms80, ms160},    OPTIONAL, -- Cond Lmax = 8
        ssbSet5-Periodicity                 ENUMERATED {ms5, ms10, ms20, ms40, ms80, ms160},    OPTIONAL, -- Cond FR2-Only
        ssbSet6-Periodicity                 ENUMERATED {ms5, ms10, ms20, ms40, ms80, ms160},    OPTIONAL, -- Cond FR2-Only
        ssbSet7-Periodicity                 ENUMERATED {ms5, ms10, ms20, ms40, ms80, ms160},    OPTIONAL, -- Cond FR2-Only
        ssbSet8-Periodicity                 ENUMERATED {ms5, ms10, ms20, ms40, ms80, ms160},    OPTIONAL, -- Cond FR2-Only
    }                                                                                           OPTIONAL,
    ...,
    [[
    ...,
    discoveryBurstWindowLength-r16      ENUMERATED {ms0dot5, ms1, ms2, ms3, ms4, ms5}           OPTIONAL, -- Need R
    highSpeedConfig-r16                 HighSpeedConfig-r16                                      OPTIONAL, -- Need R
    ]]
}
-- TAG-SERVINGCELLCONFIGCOMMONSIB-STOP
-- ASN1STOP
```

505

**FIG. 5**

```
                                  Modification 600
                       (to ServingCellConfigCommonSIB information element)

ssb-PeriodicitiesServingCell-r18   SEQUENCE {
    ssbSet1-Periodicity            ENUMERATED {ms5, ms10, ms20, ms40, ms80, ms160},
    ssbSet1-Size                   ENUMERATED {n2,n4,n8,n16,n32,n48,n64},              OPTIONAL
    ssbSet2-Periodicity            ENUMERATED {ms5, ms10, ms20, ms40, ms80, ms160},
    ssbSet2-Size                   ENUMERATED {n2,n4,n8,n16,n32,n48,n64},              OPTIONAL
    ssbSet3-Periodicity            ENUMERATED {ms5, ms10, ms20, ms40, ms80, ms160},   OPTIONAL, -- Cond Lmax = 8
    ssbSet3-Size                   ENUMERATED {n2,n4,n8,n16,n32,n48,n64},              OPTIONAL, -- Cond Lmax = 8
    ssbSet4-Periodicity            ENUMERATED {ms5, ms10, ms20, ms40, ms80, ms160},   OPTIONAL, -- Cond Lmax = 8
    ssbSet4-Size                   ENUMERATED {n2,n4,n8,n16,n32,n48,n64},              OPTIONAL, -- Cond Lmax = 8
    ssbSet5-Periodicity            ENUMERATED {ms5, ms10, ms20, ms40, ms80, ms160},   OPTIONAL, -- Cond FR2-Only
    ssbSet5-Size                   ENUMERATED {n2,n4,n8,n16,n32,n48,n64},              OPTIONAL, -- Cond FR2-Only
    ssbSet6-Periodicity            ENUMERATED {ms5, ms10, ms20, ms40, ms80, ms160},   OPTIONAL, -- Cond FR2-Only
    ssbSet6-Size                   ENUMERATED {n2,n4,n8,n16,n32,n48,n64},              OPTIONAL, -- Cond FR2-Only
    ssbSet7-Periodicity            ENUMERATED {ms5, ms10, ms20, ms40, ms80, ms160},   OPTIONAL, -- Cond FR2-Only
    ssbSet7-Size                   ENUMERATED {n2,n4,n8,n16,n32,n48,n64},              OPTIONAL, -- Cond FR2-Only
    ssbSet8-Periodicity            ENUMERATED {ms5, ms10, ms20, ms40, ms80, ms160},   OPTIONAL, -- Cond FR2-Only
    ssbSet8-Size                   ENUMERATED {n2,n4,n8,n16,n32,n48,n64},              OPTIONAL, -- Cond FR2-Only
    }                                                                                 OPTIONAL
```

# FIG. 6

EP 4 309 460 B1

700

SSB0 SSB2 SSB4 SSB6

SSB transmission pattern indicated in SIB1 or dedicated RRC message
(*ssb-PositionsInBurst*)

# FIG. 7A

750

SSB0 SSB1 SSB2 SSB3

SSB transmission pattern indicated in DCI
(*ssb-PositionsInBurstForDCI*)

# FIG. 7B

←————————————Time————————————→

←—Frequency—→

| RO1 | ∿801 | RO3 | ∿803 |
| RO2 | ∿802 | RO4 | ∿804 |

## FIG. 8A

EP 4 309 460 B1

∿810
- SSB0 mapped to RO1
- SSB2 mapped to RO2
- SSB4 mapped to RO3
- SSB6 mapped to RO4

Semi-static mapping

Re-mapping ⇒

∿815
- SSB0 mapped to RO1
- SSB2 mapped to RO2
- SSB1 mapped to RO3
- SSB3 mapped to RO4

Dynamic mapping

## FIG. 8B

FIG. 9

Network Apparatus
1000

Processor
1005

Memory
1010

Input Device
1015

Output Device
1020

Transceiver 1025

Transmitter
1030

Receiver
1035

Network Interface(s)
1040

Application Interface(s)
1045

FIG. 10

1100

```
          ┌─────────────┐
          │    Start     │
          └──────┬──────┘
                 │
                 ▼
┌─────────────────────────────────────────┐
│ Receive first information via higher layer│
│ signaling, where the first information    │
│ corresponds to time domain positions of a │
│ first set of transmitted SSBs in a first  │
│ SSB burst                                  │
└─────────────────────────────────────────┘
```

1105

Receive first information via higher layer signaling, where the first information corresponds to time domain positions of a first set of transmitted SSBs in a first SSB burst

1110

Receive second information via physical layer signaling, where the second information corresponds to time domain positions of a second set of transmitted SSBs in a second SSB burst, where the first information is different from the second information

1115

Perform random access using the first information and second information

End

# FIG. 11

1200

Start

1205 — Configure a UE with first information via higher layer signaling, where the first information corresponds to time domain positions of a first set of transmitted SSBs in a first SSB burst

1210 — Change a time domain position of at least one SSB

1215 — Transmit second information via physical layer signaling, where the second information corresponding to time domain positions of a second set of transmitted SSBs in a second SSB burst, where the first information is different from the second information, and where the second information indicates the changed time domain position of the at least one SSB

End

# FIG. 12

**EP 4 309 460 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63163794
- US 2020396744 A1
- WO 2020143064 A1